# EUROPEAN PATENT SPECIFICATION

(11) **EP 2 545 605 B1**
(45) Date of publication and mention of the grant of the patent: **31.08.2016**
(21) Application number: 11709248.6
(22) Date of filing: 04.03.2011
(51) Int. Cl.: H01M 4/06, H01M 4/36, H01M 4/48, H01M 4/50, H01M 4/52, H01M 4/54, H01M 6/04

(54) **ALKALINE BATTERY INCLUDING LAMBDA-MANGANESE DIOXIDE**
ALKALIBATTERIE BEINHALTEND LAMBDA-MAGANDIOXID
PILE ALCALINE CONTENANT DIOXYDE DE MANGANÈSE LAMBDA

(30) Priority: 12.03.2010 US 722726
(43) Date of publication of application: 16.01.2013
(73) Proprietor: Duracell U.S. Operations, Inc., Wilmington, DE 19801 (US)
(72) Inventor: NELSON, Jennifer, A., Waltham Massachusetts 02451 (US); NANJUNDASWAMY, Kirakodu, S., Sharon Massachusetts 02067 (US); ZHANG, Fan, Newtown CT 06470 (US); CHRISTIAN, Paul, A., Norton Massachusetts 02766 (US)
(74) Representative: Hoyng Rokh Monegier LLP
(86) International application number: PCT/US2011/027167
(87) International publication number: WO 2011/112443

(56) References cited:
- JP-A- 2007 026 896
- JP-A- 2008 034 294
- US-A- 5 783 334
- US-A1- 2007 015 054
- US-A1- 2007 248 879
- US-B2- 6 783 892
- US-B2- 7 045 252
- MARUTA J ET AL: "Low-temperature synthesis of lithium nickelate positive active material from nickel hydroxide for lithium cells", JOURNAL OF POWER SOURCES, ELSEVIER SA, CH, vol. 90, no. 1, 1 September 2000 (2000-09-01), pages 89-94, XP004209919, ISSN: 0378-7753, DOI: 10.1016/S0378-7753(00)00453-5 cited in the application
- KIJIMA N ET AL: "Preparation and characterization of open tunnel oxide [alpha]-MnO2 precipitated by ozone oxidation", JOURNAL OF SOLID STATE CHEMISTRY, vol. 159, no. 1, June 2001 (2001-06), pages 94-102, XP002637046, ACADEMIC PRESS, USA ISSN: 0022-4596, DOI: 10.1006/JSSC.2001.9136 cited in the application

## Description

### TECHNICAL FIELD

The invention relates to an alkaline battery including a blend or a composite of lambda-manganese dioxide and a second cathode active material, and a method of manufacturing an alkaline battery including the blend or composite.

### BACKGROUND

Batteries (e.g., electrochemical cells), such as alkaline batteries, are commonly used as electrical energy sources. Generally, a battery contains a negative electrode (anode) and a positive electrode (cathode). The negative electrode contains an electroactive material (such as zinc or zinc alloy particles) that can be oxidized; and the positive electrode contains an electroactive material (such as a manganese dioxide) that can be reduced. The active material of the negative electrode is capable of reducing the active material of the positive electrode. In order to prevent direct reaction of the active material of the negative electrode and the active material of the positive electrode, the electrodes are mechanically and electrically isolated from each other by an ion-permeable separator.

When a battery is used as an electrical energy source for a device, such as a cellular telephone, electrical contact is made to the electrodes, allowing electrons to flow through the device and permitting the oxidation and reduction reactions to occur at the respective electrodes to provide electrical power. An electrolyte solution in contact with both electrodes contains ions that diffuse through the separator between the electrodes to maintain electrical charge balance throughout the battery during discharge.

US7045252B2 discusses an alkaline battery with a cathode including lambda-manganese dioxide and gamma-manganese dioxide.

### SUMMARY

The invention relates to batteries including a cathode that includes a blend or a composite of cathode active materials and a method of manufacturing a battery including a cathode that includes the blend or the composite.

The invention provides a cathode as defined in claim 1. Suitable additional cathode active materials can include an electrolytic manganese dioxide (EMD), an acid-treated electrolytic manganese oxide, an ozone-treated electrolytic manganese oxide, a chemically-prepared manganese dioxide (e.g., CMD, pCMD), a nickel oxide, a complex metal oxide containing tetravalent nickel, a silver-containing metal oxide, an alkali or alkaline earth metal ferrate, a copper-containing metal oxide, a carbon fluoride (CFₓ)ₙ, a complex metal oxide containing pentavalent bismuth, silver (I) oxide, and combinations thereof.

For a cathode including a composite as defined in claim 1, the composite can he generated from simultaneous treatment of suitable precursor materials to the one or more additional cathode active materials and to the λ-MnO₂.

In yet another aspect, the invention features a battery including a cathode in accordance with claim 1.

The battery can further include an anode including fine zinc or zinc alloy particles, an alkaline electrolyte solution, and a separator. The battery can have a gravimetric discharge capacity greater than 320 mAh/g (e.g., greater than 330 mAh/g, greater than 340 mAh/g) when discharged at a nominal rate of 10 mA/g of active cathode material to a 0.8 V cutoff voltage. As an example, a battery including a blend of λ-MnO₂ and Li₁₋ₓH_{y}NiO₂ or λ-MnO₂ and Ag₂O can have a gravimetric discharge capacity greater than 340 mAh/g discharged at a nominal rate of 10 mA/g of active cathode material to a 0.8 V cutoff voltage. A battery including a blend of λ-MnO2 and acid-treated EMD can have a gravimetric discharge capacity greater than 320 mAh/g discharged at a nominal rate of 10 mA/g active cathode material to a 0.8 V cutoff voltage.

The method of making a cathode including the blend can include mechanically mixing λ-MnO₂ and one or more additional cathode active materials to form a blend. The method can further include milling the blend (e.g., to reduce the average particle size of the blend). The method of making a battery can include incorporating a cathode including the blend prepared by said methods into the battery. The method can include incorporating an anode including fine zinc or zinc alloy particles into the battery. The method can further include incorporating an alkaline electrolyte and a separator into the battery.

The battery can further include an anode including fine zinc or zinc alloy particles, an alkaline electrolyte solution, and a separator. The battery can have a gravimetric discharge capacity greater than 330 mAh/g (e.g., greater than 340 mAh/g) discharged at a nominal rate of 10 mA/g of active cathode material to a 0.8 V cutoff voltage.

The cathode can include a composite of λ-MnO₂ and one or more cathode active materials, said material comprising a partially delithiated layered lithium nickel oxide having the chemical formula Li₁₋ₓH_{y}NiO₂, wherein 0.1 ≤ x ≤ 0.9 and 0.1 ≤ y ≤ 0.9. The layered cobalt oxide can include a partially delithiated layered lithium cobalt oxide.

In some embodiments, the method of making a cathode including a composite includes blending nominally stoichiometric LiMn₂O₄ spinel and precursors to one or more cathode active materials to form a mixture and treating the mixture with an aqueous acid solution at low temperature to form a composite of λ-MnO₂ and one or more cathode active materials. The precursors to one or more cathode active materials can include electrolytic manganese dioxide, chemically-prepared manganese oxide, layered lithium nickel oxide, layered sodium nickel oxide, layered lithium cobalt oxide, layered sodium cobalt oxide, layered lithium manganese oxide, layered sodium manganese oxide, and/or combinations thereof.

Embodiments can include one or more of the following advantages.

In some embodiments, a battery including a blend or composite of λ-MnO₂ and one or more cathode active materials can have improved discharge performance compared to a battery including a single cathode active material, such as λ-MnO₂ or each of the one or more cathode active materials included in the blend or composite. In some embodiments, the blend or composite can include populations of particles having different average diameters and can have improved packing compared to a cathode active material having populations of particles of similar average diameters (e.g., within 5%, 10%, or 20% of one another). A battery including the blend or composite can have an average closed circuit voltage (CCV) of 1.0 V or more (e.g., 1.2 V or more, or 1.5 V or more), a gravimetric specific capacity at a relative low discharge rate (e.g., 10 mA/g active) to a 0.8V cutoff voltage of greater than 300 mAh/g (e.g., greater than 320 mAh/g, greater than 325 mAh/g, greater than 330 mAh/g, greater than 340 mAh/g, greater than 350 mAh/g), relatively good performance at a relative high discharge rate (e.g., 100 mA/g active, 140 mA/g active), and/or a relatively good capacity retention after storage. The blend or composite can replace, in part or in full, the cathode active material (e.g., electrolytic manganese dioxide, "EMD") in commercial alkaline cells. The blend or composite can provide a battery with greater discharge capacity relative to a calculated sum of the proportional anticipated capacities of batteries each including a single cathode active material.

Incorporation of a blend or composite of cathode active materials into the cathode of a battery can be relatively easily implemented into the battery manufacturing process. In some embodiments, a blend or composite of active materials can lead to decreased manufacturing costs, as less cathode active materials can be used to make a battery having improved or similar performance compared to a battery including a greater amount of a single cathode active material component of the blend or composite. In another embodiment, the blend or composite can include a less expensive cathode active material in combination with a more expensive cathode material and can provide performance nearly comparable to that of only the more expensive cathode active material.

Other aspects, features, and advantages of the invention will be apparent from the drawing, description, and claims.

### DESCRIPTION OF THE DRAWINGS

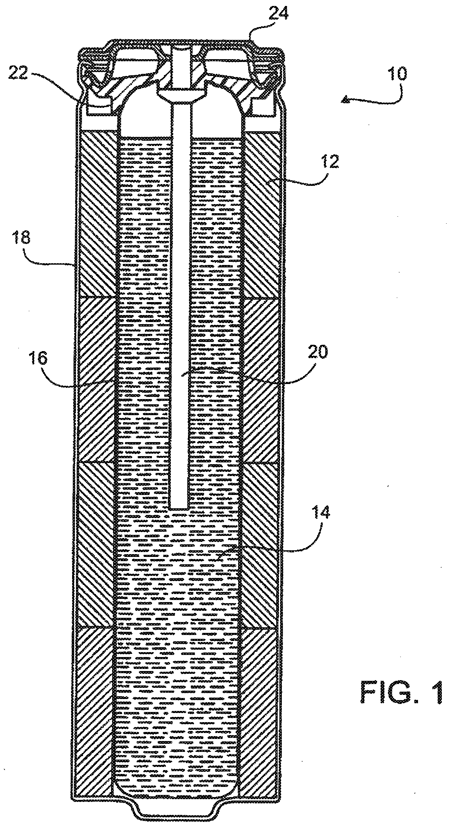

FIG 1 is a schematic side-sectional view of a battery;

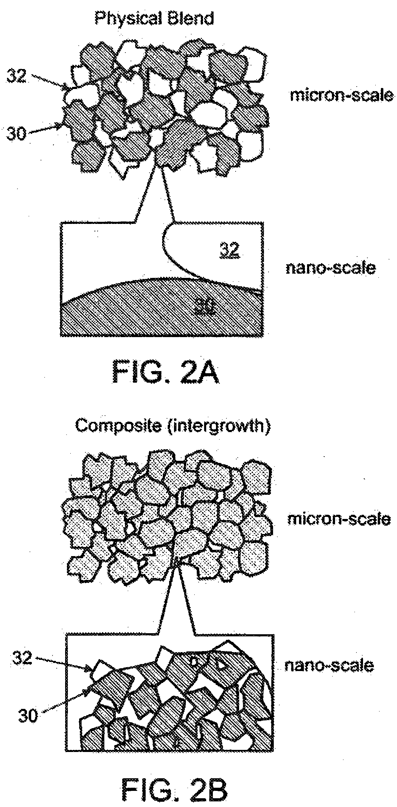

FIG 2 is a schematic representation depicting embodiments of (A) a physical blend of two cathode active materials, and (B) a composite of two cathode active materials;

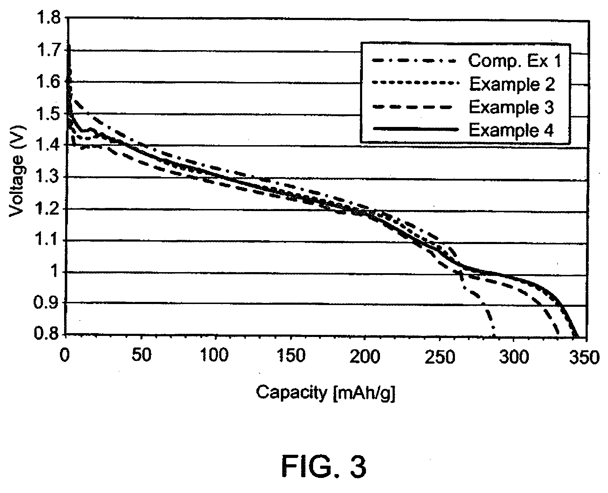

FIG 3 is a graph showing discharge performance of a battery including a cathode including λ-MnO₂ or a commercial EMD as a single active material discharged at a relative low rate (e.g., 10 mA/g active) to a 0.8 V cutoff voltage;

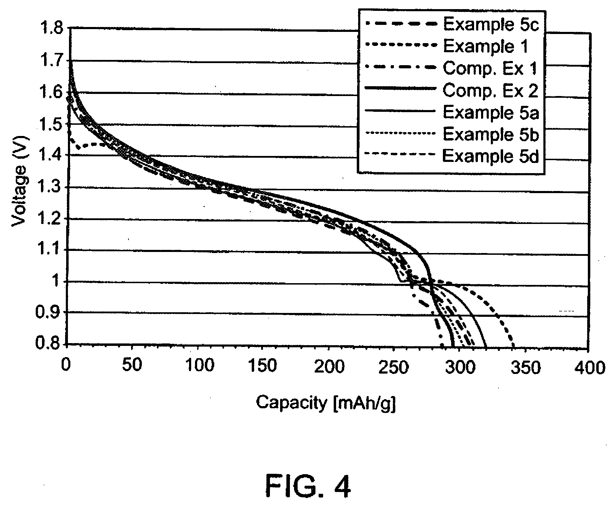

FIG 4 is a graph showing discharge performance of a battery including a cathode including a blend of λ-MnO₂ and an acid-treated EMD in various weight ratios, a battery including commercial EMD, a battery including an acid-treated EMD, or a battery including λ-MnO₂, discharged at a relative low rate (e.g., 10 mA/g active) to a 0.8 V cutoff voltage;

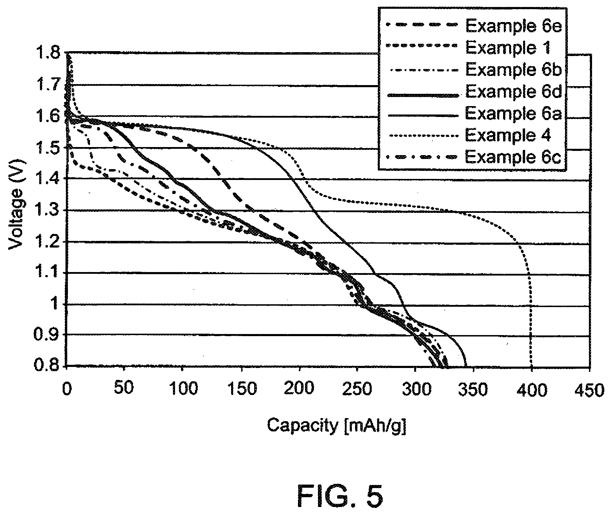

FIG 5 is a graph showing discharge performance of a battery including a cathode including a blend of λ-MnO₂ and Li₁₋ₓH_{y}NiO₂ in various weight ratios, a battery including Li₁₋ₓH_{y}NiO₂, or a battery including λ-MnO₂, discharged at a relative low rate (e.g., 10 mA/g active) to a 0.8 V cutoff voltage;

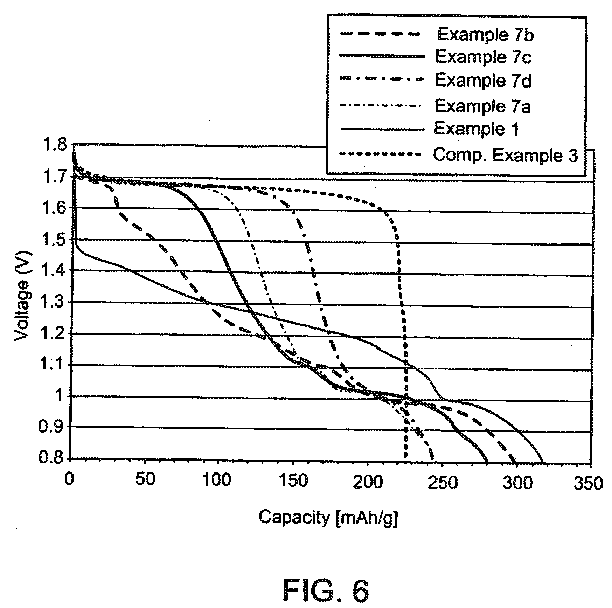

FIG 6 is a graph showing discharge performance of a battery including a cathode including a blend of λ-MnO₂ and CoOOH-coated β-NiOOH in various weight ratios, a battery including CoOOH-coated β-NiOOH, or a battery including λ-MnO₂ as a single active material, discharged at a relative low rate (e.g., 10 mA/g active) to a 0.8 V cutoff voltage;

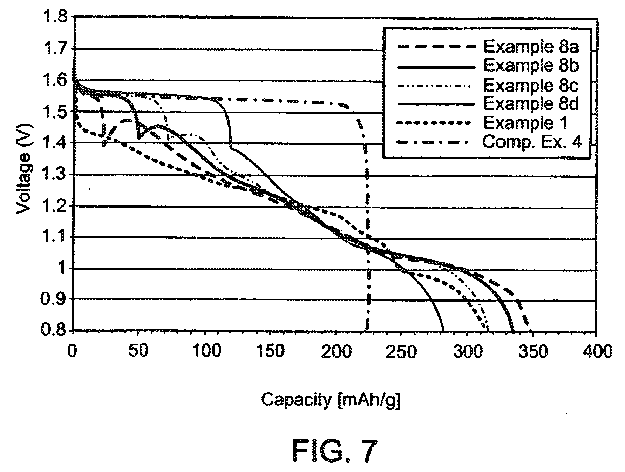

FIG 7 is a graph showing discharge performance of a battery including a cathode including a blend of λ-MnO₂ and Ag₂O in various weight ratios, a battery including Ag₂O, or a battery including λ-MnO₂ as a single active material, discharged at a relative low rate (e.g., 10 mA/g active) to a 0.8 V cutoff voltage;

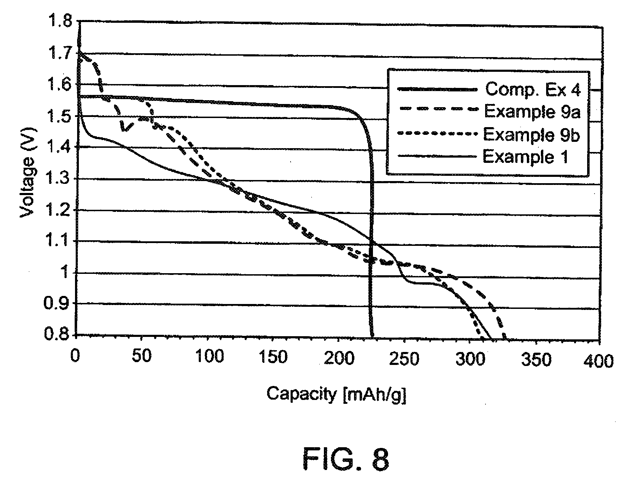

FIG. 8 is a graph showing discharge performance of a battery including a cathode including a blend of λ-MnO₂, CoOOH-coated β-NiOOH, and Ag₂O in various weight ratios, a battery including Ag₂O, a battery including CoOOH-coated β-NiOOH, or a battery including λ-MnO₂ as a single active material discharged at a relative low rate (e.g., 10 mA/g active) to a 0.8 V cutoff voltage; and

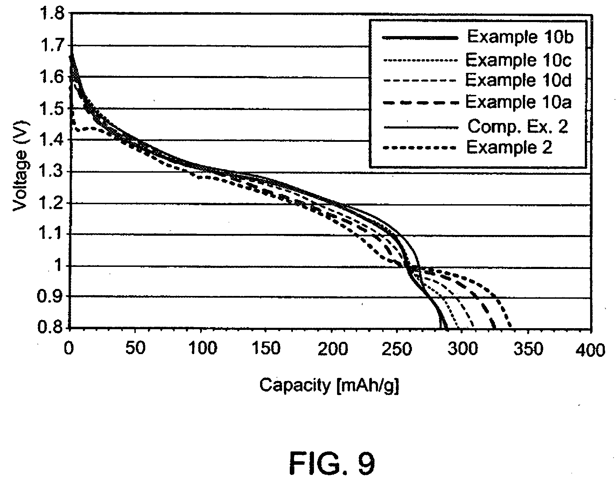

FIG 9 is a graph showing discharge performance of a battery including a cathode including a composite of λ-MnO₂ and acid-treated EMD in various weight ratios, a battery including a commercial EMD, a battery including acid-treated EMD, or a battery including λ-MnO₂ as a single active material discharged at a relative low rate (e.g., 10 mA/g active) to a 0.8 V cutoff voltage.

### DETAILED DESCRIPTION

Referring to FIG. 1, a battery 10 includes a cylindrical housing 18, a cathode 12 in the housing, an anode 14 in the housing, and a separator 16 between the cathode and the anode. Battery 10 also includes a current collector 20, a seal 22, and a metal top cap 24, which serves as the negative terminal for the battery. Cathode 12 is in contact with housing 18, and the positive terminal of battery 10 is at the opposite end of battery 10 from the negative terminal. An electrolyte solution, e.g., an aqueous alkaline solution, is dispersed throughout battery 10.

Cathode 12 includes a blend or composite of λ-MnO₂ and one or more additional cathode active materials, and can further include an electrically conductive additive and optionally a polymeric binder. As used herein, λ-MnO₂ is a crystalline manganese dioxide phase having a cubic spinel-related crystal structure, and is described, for example, in U.S. Patent No. 7,045,252. The λ-MnO₂ can be synthesized by various methods including delithiation of a nominally stoichiometric lithium manganese dioxide spinel, having a chemical formula LiMn₂O₄, by extracting or washing the spinel with an aqueous acid solution to remove essentially all the lithium ions from its crystal lattice (e.g., more than 90 %, more than 94 %, more than 97 % of the lithium ions).

As used herein, a blend refers to a physical mixture of two or more cathode active materials, where the particles of the two or more cathode materials are physically (e.g., mechanically) interspersed to form a nominally homogeneous assemblage of particles on a macroscopic scale, wherein each type of particle retains its original chemical composition. Referring to FIG. 2a, a physical mixture (e.g., a blend) of two or more cathode active materials 30 and 32 is shown, wherein particles of the two or more cathode active materials are physically (e.g., mechanically) dispersed so as to form a macroscopically uniform mixture of particles (e.g., on the millimeter to micron dimension scale), wherein each particle retains its original chemical composition and essentially its original physical properties, and the area of interfacial contact between particles of the different active materials is relatively limited. Blends are described, for example, by S. Komaba et al. (Electrochimica Acta, 2005, 50, 2297-2305). The blend can include λ-MnO₂ and one or more cathode active materials. When incorporated into an alkaline battery, the blend can provide the battery with improved overall battery discharge performance relative to batteries including only a single cathode active material component of the blend. For example, in some embodiments, a battery that includes a blend of λ-MnO₂ and one or more additional cathode active materials in selected weight ratios can have improved fresh discharge capacity, increased closed circuit voltage ("CCV"), increased average discharge voltage (i.e., voltage at 50% depth of discharge, "DOD"), and/or an overall improved discharge performance compared to a battery that includes a single cathode active material (e.g., λ-MnO₂ or each of the one or more additional cathode active materials) of the blend.

As used herein, a composite refers to a multiphase material formed by combining two or more cathode active materials, where the particles of the two or more cathode active materials are bonded together to form a nominally homogeneous assemblage on a microscopic scale. The composite has multiple interfaces between particles, such that the two or more cathode active materials can act in concert to provide improved or synergistic discharge performance characteristics. The composition of each particle in the composite can differ from that of the original precursor particle prior to formation of the composite. Referring to FIG. 2b, a composite including two or more cathode active materials 30 and 32 is shown, where particles of the two or more cathode active materials are bonded together either chemically or physically to form an intergrowth of particles. The intergrowth of particles has multiple and extensive interfacial contacts between the particles on a micron to nanometer dimension scale, as described, for example, by S. Komaba et al. (Electrochimica Acta, 2005, 50, 2297-2305). The composite can include a λ-MnO₂ and one or more other cathode active materials. When incorporated into an alkaline battery, the composite can provide a battery having improved overall discharge performance relative to batteries including particles of a single cathode active material component of the composite, or to batteries including a blend of λ-MnO₂ and one or more additional cathode active materials. For example, in some embodiments, a battery that includes a composite of λ-MnO₂ and one or more additional cathode active materials can have increased discharge capacity, CCV, and average discharge voltage, and/or an overall improved discharge performance compared to a battery that includes a blend of λ-MnO₂ and one or more additional cathode active materials in the same nominal weight ratio.

Generally, the blend or composite includes λ-MnO₂ and one or more additional cathode active materials (e.g., a second cathode active material, a third cathode active material, and/or a fourth cathode active material) said material comprising partially delithiated layered lithium nickel oxide. In the case of a blend, the one or more additional cathode active materials can include one or more of an electrolytic manganese dioxide, an acid-treated electrolytic manganese dioxide ("acid-treated EMD"); an ozone gas-treated EMD ("O-EMD"); a chemically synthesized manganese dioxide ("CMD"), such as a pCMD including α-MnO₂ and γ-MnO₂; a nickel oxyhydroxide such as β-NiOOH and γ-NiOOH; a CoOOH-coated NiOOH such as CoOOH-coated β-NiOOH and CoOOH-coated γ-NiOOH; lattice intergrowths of β-NiOOH and γ-NiOOH; CoOOH-coated lattice intergrowths of β-NiOOH and γ-NiOOH; a partially delithiated, layered lithium nickel oxide containing tetravalent nickel, for example, Li₁₋ₓH_{y}NiO₂ where 0.1 ≤ x ≤ 0.9 and 0.1 ≤ y ≤ 0.9; complex metal oxides containing pentavalent bismuth, such as silver bismuthate (AgBiO₃), zinc bismuthate (ZnBi₂O₆), and magnesium bismuthate (MgBi₂O₆); silver oxides, including monovalent silver oxide (Ag₂O), divalent silver oxide (AgO), silver copper oxide (AgCuO₂), partially reduced silver copper oxide (Ag₂Cu₂O₃), silver nickel oxide (AgNiO₂); and silver cobalt nickel oxide (AgₓCo_{y}Ni_{z}O₂, with x+y+z = 2, x≤1.1, y>0); copper oxides including monovalent copper oxide (Cu₂O), divalent copper oxide (CuO), and a copper manganese oxide defect spinel, such as Cu_{1.5}Mn_{1.5}O_{4.5}; alkali or alkaline earth metal ferrates, such as potassium ferrate (K₂FeO₄), barium ferrate (BaFeO₄), strontium ferrate (SrFeO₄), and cesium ferrate (Cs₂FeO₄); and/or partially fluorinated graphites (e.g., (CFₓ)ₙ with x<1). In some embodiments, other cathode active materials having average voltage values between about 1.0 V and 1.7 V, about 1.25 V and 1.65 V, about 1.3 V and 1.6 V can be included advantageously in blends with λ-MnO₂.

In the case of a composite, the one or more additional cathode active materials within the composite can include one or more of an acid-treated EMD; an acid-treated CMD, for example, a porous manganese oxide having a tunnel structure prepared from a precursor manganese oxide having a tunnel structure and containing alkali or alkaline earth metal ions such as hollandite (e.g., BaMn₈O₁₆), cryptomelane (e.g., K₂₋ₓMn₈O₁₆), romanechite (e.g., Ba_{0.7}Mn₅O₁₀), todorokite (e.g., (Mg, Ca, K)_{0.6}(Mn, Mg)₆O₁₂), orthorhombic Na_{0.44}MnO₂ and the like; a partially delithiated, layered lithium nickel oxide containing tetravalent nickel, for example; Li₁₋ₓH_{y}NiO₂ (e.g., 0.1 ≤ x ≤ 0.9; 0.1 ≤ y ≤ 0.9) prepared from a layered LiNiO₂; a demetallated silver nickel oxide containing tetravalent nickel prepared by partial removal of silver from AgNiO₂; a demetallated, layered cobalt oxide prepared by removal of lithium from LiCoO₂ or sodium from NaCoO₂; and/or a demetallated, layered lithium manganese oxide prepared by removal of lithium from LiMnO₂ or sodium from NaMnO₂.

In general, batteries including blends or composites of cathode active materials can have discharge curves with voltage profiles including one or more flat plateaus at different voltages and one or more regions in which the voltage is smoothly or precipitously decreasing, depending on the characteristic voltage profile of the additional cathode active material and the battery discharge conditions. In some embodiments, the additional cathode active material can be present with λ-MnO₂ in various weight ratios ranging from 1:99 to 99:1 (e.g., from 1:19 to 19:1, from 1:9 to 9:1).

Without wishing to be bound by theory, it is believed that when λ-MnO₂ is incorporated into the cathode of an alkaline battery, the λ-MnO₂ can undergo a multi-electron reduction during discharge. For example, referring to Equation (1), during discharge, λ-MnO₂ can undergo a total reduction of 1.33 electrons / Mn, accompanied by transformation of the cubic spinel lattice of λ-MnO₂ (including predominantly Mn⁴⁺ ions), to a different mixed valence manganese oxide having a different spinel-type structure (including both Mn³⁺ and Mn²⁺ ions). The mixed valence manganese oxide spinel discharge product can be identified by X-ray powder diffraction as hausmannite (Mn₃O₄) by comparison with the standard diffraction pattern reported for Mn₃O₄ (e.g., Powder Diffraction File No. 24-0734; International Centre for Diffraction Data, Newtown Square, PA). Referring to Equation (2), it is further hypothesized that the additional capacity appearing on a flat plateau having an average voltage of about 1.05 to 0.95 V in a typical discharge curve of an alkaline cell with a cathode including λ-MnO₂ can be attributed to the reduction of a putative protonated, spinel-related intermediate phase, for example, "H₂Mn₂O₄", via a heterogeneous conversion-type reaction to form the final 1.33 electrons / Mn discharge product, Mn₃O₄.

3λ-Mn⁴⁺O₂ + 2H₂O + 4e⁻ → Mn²⁺Mn₂³⁺O₄ + 4OH⁻ (1)

3 H₂Mn₂³⁺O₄ + 2e⁻ → 2 Mn²⁺Mn³⁺₂O₄ + 5H₂O (2)

Discharge performance of several examples of λ-MnO₂ materials prepared by various delithiation methods is described, for example, by X. Xia et al. (Dianyuan Jishu, 1999, 23 (Suppl.), 74-76), O. Schilling et al. (ITE Letters on Batteries, 2001, 2(3), B24-31), and in U.S. Patent No. 6,783,893.

### λ-MnO₂ cathode active material

λ-MnO₂ can be prepared by acid-treatment of a nominally stoichiometric LiMn₂O₄ spinel from a commercial source or from a spinel synthesized by any of a variety of methods. For example, a lithium manganese oxide spinel can be prepared by solid state reaction of an intimate mixture of a lithium compound and a manganese oxide in air or oxygen at an elevated temperature (e.g., 700-800 °C), as described, for example, by M. M. Thackeray (Progress in Solid State Chemistry, 1997, 25, 1-75).

In some embodiments, LiMn₂O₄ spinels having much higher specific surface areas and smaller average particle sizes can be prepared via a sol gel-type process. Spinel synthesized by a sol gel-type process can have a relatively high porosity, relatively high specific surface area (e.g., >30 m²/g), small average particle size (e.g., <1 µm), and/or low bulk (e.g., <0.5 g/cm³) and tap (e.g., <1.0 g/cm³) densities. In turn, λ-MnO₂ prepared from these spinel powders also can have high specific surface area, relatively small average particle size, and low bulk and tap densities. In some embodiments, powders with low tap densities can provide cathode pellets having crush strength too low for battery assembly. In addition, cells with cathodes including λ-MnO₂ powders having low tap densities can have relatively low volumetric capacities compared to cells with cathodes including λ-MnO₂ powders having higher (e.g., >1.4 g/cm³) tap densities.

In some embodiments, a nominally stoichiometric LiMn₂O₄ spinel can be prepared from a small particle, crystalline chemically-prepared manganese(IV) oxide (i.e., "CMD") having a ramsdellite, γ-MnO₂ or α-MnO₂-type crystal structure. Such a CMD can be generated, for example, by chemical oxidation of an aqueous solution containing controlled concentrations of a soluble Mn²⁺salt such as manganese sulfate or manganese nitrate with a strong oxidant, for example, a peroxydisulfate salt such as sodium peroxydisulfate (Na₂S₂O₈), potassium peroxydisulfate (K₂S₂O₈) or ammonium peroxydisulfate ((NH₄)₂S₂O₈) under controlled heating conditions. Other strong chemical oxidants can include, for example, sodium bromate (NaBrO₃), potassium bromate (KBrO₃), potassium bromate (KBrO₃), potassium permanganate (KMnO₄), and lithium permanganate (LiMnO₄). Preparation of small particles of various MnO₂ phases including α-MnO₂, β-MnO₂, ramsdellite, γ-MnO₂, and ε-MnO₂ via chemical or electrochemical oxidation of Mn²⁺ salts under hydrothermal reaction conditions is described, for example, by L. I. Hill et al., (Electrochemical and Solid State Letters, 2001, 4(6), D1-3); X. Wang et al. (Journal of the American Chemical Society, 2002, 124(12), 2880-1); H. Fang et al. (Journal of Power Sources, 2008, 184, 494-7); and/or L. Benhaddad et al. (Applied Materials and Interfaces, 2009, 1(2), 424-432).

In some embodiments, a small particle, crystalline MnO₂ phase known as "pCMD", having a ramsdellite, γ-MnO₂, or α-MnO₂-type crystal structure and a characteristic filamentary or "sea urchin-like" nanostructure, can be used advantageously for the preparation of LiMn₂O₄ spinel. Preparation of pCMD is taught, for example, in U.S. Patent No. 5,277,890. As an example, a pCMD having a tap density of greater than 1.5 g/cm³ can be synthesized by adding an equimolar amount of solid Na₂S₂O₈ powder to a 0.4 M MnSO₄ aqueous solution; heating the solution to 50-80 °C in air; separating the solid product from the supernatant liquid, washing the solid product, and drying the solid product in air. The pCMD can have a ramsdellite or γ-MnO₂-related crystal structure. In some embodiments, solid (NH₄)₂S₂O₈ or an aqueous solution of (NH₄)₂S₂O₈ can be substituted for Na₂S₂O₈ as the oxidizing agent. When (NH₄)₂S₂O₈ is used, the resulting pCMD can have an α-MnO₂-related crystal structure with comparable average agglomerate size (e.g., 4-10 µm) and specific surface area (e.g., >24 m²/g), but a lower tap density (e.g., 1.1-1.3 g/cm³) compared to the tap density (e.g., 1.7-2.1 g/cm³) of a pCMD prepared using Na₂S₂O₈ as the oxidizing agent. In some embodiments, instead of a peroxydisulfate salt, ozone gas can be used as the oxidizing agent as described by N. Kijima et al. (Journal of Solid State Chemistry, 159, 2001, 94-102) and J. Dai et al. (Proceedings, 40th Power Sources Conference, 2002, 283-286).

Hydrothermally-generated small particles of α-MnO₂, ramsdellite, γ-MnO₂, and/or pCMD-related particles can be reacted directly with a lithium salt by a variety of methods to form a nominally stoichiometric LiMn₂O₄ spinel. For example, a γ-MnO₂ can be mixed with a solid lithium salt such as lithium hydroxide, lithium oxide, lithium carbonate, lithium acetate, lithium chloride, and/or lithium nitrate in a mole ratio of Li:Mn of about 0.5, and heated at 300°C to 450°C in air for at least 1 hour or more, to form stoichiometric LiMn₂O₄, as described, for example, in U.S. Patent No. 4,959,282. Alternatively, the γ-MnO₂ can be treated hydrothermally with a 3M LiOH aqueous solution at 50-90 °C to form a lithiated manganese oxide that can be converted to LiMn₂O₄ spinel by heating at 500-800 °C in air as described, for example, in U.S. Patent No. 6,334,993. In some embodiments, a hydrothermally-generated CMD or pCMD can be reacted with lithium hydroxide in a mole ratio of Li to Mn of about 0.5 in a eutectic salt melt containing equal weights of NaCl and KCl with a weight ratio of total salt to CMD or pCMD of about 2 to 1, at between 750 and 800°C for about 12 hours in air, to form nominally stoichiometric LiMn₂O₄ spinel. Residual salts can be extracted with deionized water, the spinel dried, and then heat treated in air between 700 and 800°C for 12 hours to complete spinel formation and increase the particle agglomerate size.

A suitable λ-MnO₂ can be synthesized by various methods including delithiation by extraction or washing a lithium manganese oxide spinel, having a nominal stoichiometry of LiMn₂O₄, with an aqueous acid solution to remove essentially all the lithium ions from the spinel crystal lattice (e.g., more than 90 %, more than 94 %, more than 97 % of the lithium ions). As used herein, the lithium manganese oxide spinel can have a composition, for example, corresponding to a general formula of Li₁₊ₓMn₂₋ₓO₄, where x ranges from -0.075 to +0.075, from -0.05 to +0.05, from -0.02 to +0.02, such as Li_{1.01}Mn_{1.99}O₄. Aqueous acid extraction of lithium ions from a lithium manganese oxide spinel to prepare a λ-MnO₂ is described, for example, in U.S. Patent Nos. 4,246,253; 4,312,930; and 6,783,893. The acid can include, for example, aqueous solutions of sulfuric acid, nitric acid, hydrochloric acid, perchloric acid, oleum, toluenesulfonic acid, and/or trifluoromethylsulfonic acid. The concentration of the aqueous acid solution can range from 0.1M to 10M (e.g., from 1M to 10M, or from 4M to 8M). A preferred acid solution is 6M sulfuric acid. The acid extraction treatment can be performed between 10 °C and 90 °C (e.g., between 15 °C and 50 °C) for a duration of about 0.75 to about 24 hours.

In some embodiments, a low temperature acid extraction treatment can be used to generate a high purity, single phase λ-MnO₂ from a nominally stoichiometric lithium manganese oxide spinel. For example, the solid spinel powder can be added to a 6M H₂SO₄ aqueous solution that has been previously cooled to 2 °C, with constant stirring to form a slurry. The temperature of the slurry can be maintained between about -5 °C and 15 °C (e.g., preferably between 0 °C and 10 °C; more preferably between 0 °C and 5 °C) with constant stirring for about 4 to 12 hours. A solid product can be isolated from the liquid, washed with de-ionized water, and dried in air, to obtain λ-MnO₂. Maintaining the slurry at a low temperature below ambient room temperature, for example at about 5 °C, during the acid extraction treatment can minimize formation of undesirable manganese oxide reaction side products. It is believed that reaction side products can be generated by re-oxidation of dissolved Mn²⁺ ions by air or Mn⁴⁺ ions on the surface of the λ-MnO₂ particles. It is further believed that the side products can precipitate onto the surface of the λ-MnO₂ particles thereby decreasing electrochemical activity. A suitable method for synthesizing λ-MnO₂ by a low temperature acid extraction treatment is described, for example, in Attorney Docket 08935-0427001, filed concurrently with the present application.

Without wishing to be bound by theory, it is believed that acid extraction of a lithium manganese oxide spinel includes a step in which Mn³⁺ ions located on the surface of the spinel particles and in direct contact with the acid solution can disproportionate to form insoluble Mn⁴⁺ and soluble Mn²⁺ ions that dissolve in the acid solution along with the extracted Li⁺ ions. Complete extraction of Li⁺ ions from a nominally stoichiometric spinel can result in dissolution of about 25 mole % of the Mn in the spinel as soluble Mn²⁺ ions.

Without wishing to be bound by theory, it is believed that in the case of a spinel having an excess lithium stoichiometry, for example Li₁₊ₓMn₂₋ₓO₄, where +0.10 ≤ x ≤ +0.33, the excess Li⁺ ions can be ion-exchanged by protons during the acid extraction process after extraction of Li⁺ ions by disproportionation of Mn³⁺ ions. For example, in the case of a nominally stoichiometric spinel, there is little or no ion-exchange of Li⁺ ions by protons. It is further believed that because relatively few lithium ions in a nominally stoichiometric spinel are ion-exchanged by protons during the acid extraction process, the formed λ-MnO₂ can be essentially "proton-free" as well as essentially "lithium-free" and can function more effectively as a proton insertion cathode in an alkaline battery.

Physical, microstructural, and chemical properties of LiMn₂O₄ spinels, λ-MnO₂, or components of a blend or composite, can be obtained using a variety of known methods. For example, X-ray powder diffraction patterns for the spinels and corresponding λ-MnO₂ phases can be measured with an X-ray diffractometer (e.g., Bruker D-8 Advance X-ray diffractometer, Rigaku Miniflex diffractometer) using Cu K_{α} or Cr K_{α} radiation by standard methods described, for example, by B. D. Cullity and S. R. Stock (Elements of X-ray Diffraction, 3rd ed., New York: Prentice Hall, 2001). The cubic unit cell constant, aₒ, can be determined by Rietveld analysis of the powder diffraction data. In some embodiments, the refined cubic unit cell constant, aₒ, can be correlated with the amount of residual lithium in the λ-MnO₂ spinel lattice (e.g., the smaller the aₒ value, the less the lithium content in λ-MnO₂). The X-ray crystallite size also can be evaluated by analysis of peak broadening in an X-ray diffraction pattern containing an internal Si standard using the single-peak Scherrer method or the Warren-Averbach method as discussed in detail, for example, by H. P. Klug and L.E. Alexander (X-ray Diffraction Procedures for Polycrystalline and Amorphous Materials, New York: Wiley, 1974, 618-694).

The specific surface areas of the spinel, λ-MnO₂ powders, or components of a blend or composite, can be determined by the multipoint B.E.T. N₂ adsorption isotherm method described, for example, by P. W. Atkins (Physical Chemistry, 5th edn., New York: W. H. Freeman & Co., 1994, pp. 990-992) and S. Lowell et al. (Characterization of Porous Solids and Powders: Powder Surface Area and Porosity, Dordrecht, The Netherlands: Springer, 2006, pp. 58-80). The B.E.T. surface area measures the total surface area on the exterior surfaces of particles and includes that portion of the surface area defined by open pores within the particle accessible for gas adsorption and desorption. In some embodiments, the specific surface area of λ-MnO₂ can be substantially greater than those of the corresponding spinel powders. An increase in specific surface area can be correlated with an increase in surface roughness and porosity, which can be assessed by analyzing the particle microstructures of the spinel powders and the corresponding λ-MnO₂ powders as imaged by scanning electron microscopy (e.g., SEM micrographs at about 10,000X magnification).

Porosimetric measurements can be conducted on the spinel powders and the corresponding λ-MnO₂ powders to determine cumulative pore volumes, average pore sizes (i.e., diameters), and pore size distributions. Pore sizes and pore size distributions were calculated by applying various models and computational methods (e.g., BJH, DH, DR, HK, SF, etc.) for analysis of data from measurement of N₂ adsorption and/or desorption isotherms as discussed, for example, by S. Lowell et al. (Characterization of Porous Solids and Powders: Powder Surface Area and Porosity, Dordrecht, The Netherlands: Springer, 2006, pp. 101-156).

Mean particle sizes and size distributions for the spinel powders and corresponding λ-MnO₂ powders, or components of a blend or composite, can be determined with a laser diffraction particle size analyzer (e.g., a SympaTec Helos particle size analyzer equipped with a Rodos dry powder dispersing unit) using algorithms based on Fraunhofer or Mie theory to compute the volume distribution of particle sizes and mean particle sizes. Particle size distribution and volume distribution calculations are described, for example, in M. Puckhaber and S. Rothele (Powder Handling & Processing, 1999, 11(1), 91-95 and European Cement Magazine, 2000, 18-21). Typically, the spinel powder and the corresponding λ-MnO₂ powders can consist of loose agglomerates or sintered aggregates (i.e., secondary particles) composed of much smaller primary particles. Such agglomerates and aggregates are readily measured by a particle size analyzer. The average size of the primary particles can be determined by microscopy (e.g., SEM, TEM).

True densities for the spinel powders and the corresponding λ-MnO₂ powders, or components of a blend or composite, can be measured by a He gas pycnometer (e.g., Quantachrome Ultrapyc Model 1200e) as described in general by P.A. Webb ("Volume and Density Determinations for Particle Technologists", Internal Report, Micromeritics Instrument Corp., 2001, pp. 8-9) and in, for example, ASTM Standard D5965-02 ("Standard Test Methods for Specific Gravity of Coating Powders", ASTM International, West Conshohocken, PA, 2007) and ASTM Standard B923-02 ("Standard Test Method for Metal Powder Skeletal Density by Helium or Nitrogen Pycnometry", ASTM International, West Conshohocken, PA, 2008). True density is defined, for example, by the British Standards Institute, as the mass of a particle divided by its volume, excluding open pores and closed pores.

In addition, elemental compositions of the spinel and the corresponding λ-MnO₂, or components of a blend or composite, can be determined by inductively coupled plasma atomic emission spectroscopy (ICP-AES) and/or by atomic absorption spectroscopy (AA) using standard methods as described in general, for example, by J.R. Dean (Practical Inductively Coupled Plasma Spectroscopy, Chichester, England: Wiley, 2005, 65-87) and B. Welz & M. B. Sperling (Atomic Absorption Spectrometry, 3rd ed., Weinheim, Germany: Wiley VCH, 1999, 221-294). Further, the average oxidation state (i.e., valence) of Mn in the spinel and the corresponding λ-MnO₂ can be determined by chemical titrimetry using ferrous ammonium sulfate and standardized potassium permanganate solutions as described, for example by A. F. Dagget and W. B. Meldrun (Quantitative Analysis, Boston: Heath, 1955,408-409).

### Additional cathode active materials

According to the invention, the additional cathode active material comprises layered lithium nickel oxide in accordance with claim 1.

In some embodiments, the one or more cathode active materials can be treated with acid at a low temperature to increase the amount of high-valent metals and/or decrease impurity levels, prior to incorporation into a blend of cathode active materials including λ-MnO₂. Physical, microstructural, and chemical properties of the one or more additional cathode materials can be obtained using the same methods as for LiMn₂O₄ spinel and λ-MnO₂. As in the case of acid extraction of LiMn₂O₄ spinel to prepare λ-MnO₂, the acid can include a mineral acid such as aqueous sulfuric acid, aqueous nitric acid, aqueous hydrochloric acid, aqueous perchloric acid, and/or aqueous oleum. In some embodiments, treatment with nitric acid or hydrochloric acid can occur at a higher temperature than acid treatment with sulfuric acid. For example, the temperature of acid treatment with hydrochloric acid or nitric acid typically can be 45 °C or more (e.g., 60 °C or more, 75 °C or more, or 85 °C or more) and/or 95 °C or less (e.g., 85 °C or less, 75 °C or less, or 60 °C or less). In some embodiments, acid treatment with nitric acid or hydrochloric acid can occur for a shorter or longer duration than acid treatment with sulfuric acid.

In some embodiments, electrolytic manganese dioxide (EMD) can be treated with an aqueous solution of a strong, oxidizing mineral acid, for example, sulfuric acid, nitric acid, hydrochloric acid, perchloric acid, and oleum (i.e., fuming sulfuric acid) to remove metallic impurities and increase average Mn oxidation state. Acid-treated EMD can have increased total structural water, increased porosity, and higher OCV compared to untreated commercial EMD, and when included in the cathode of alkaline battery, can provide an improved high rate discharge performance. In some embodiments, when acid-treated EMD is substituted for untreated EMD in the cathode of a conventional alkaline battery, the high rate intermittent performance (e.g., digital camera test) and/or the low/medium rate performance can improve. A suitable method for acid treatment of EMD is described, for example, in Attorney Docket 08935-0426001, filed concurrently with the present application.

In some embodiments, electrolytic manganese dioxide (EMD) can be treated with ozone gas to increase the average manganese oxidation state and thereby increase the specific discharge capacity of an alkaline cell with a cathode including the ozone gas-treated EMD. Typically, as prepared EMD is a non-stoichiometric material that can be represented by the general formula Mn⁴⁺_{(1-x-y)}Mn³⁺_{y}[V]ₓO_{(2-4x-y)}(OH)_{(4x+y)}, wherein [V] represents cation vacancies on Mn⁴⁺ lattice sites, OH represents hydroxyl groups resulting from the presence of protons compensating the deficiency of positive charge resulting from the Mn⁴⁺ vacancies and/or Mn³⁺ cations to maintain overall electroneutrality of the crystal lattice. The values x and y correspond to the levels of Mn⁴⁺ vacancies and Mn³⁺ cations, respectively, in the crystal lattice. Alternatively, a simplified formula for a conventional commercial EMD can be represented as MnO_{z} wherein 1.950 ≤ z ≤ 1.970. The value z also is commonly referred to as the "degree of peroxidation" of manganese and has a numerical value equivalent to 50% of the average manganese oxidation state. For example, if the formula determined for a typical commercial EMD is MnO_{1.92}, the degree of peroxidation is 1.92 and the average manganese oxidation state is +3.84, assuming a value of -2 for the oxidation state of oxygen. As used herein, the average manganese oxidation state is the simple arithmetic average of the oxidation states of all Mn atoms in the compound, that is the sum of oxidation state of each Mn atom divided by the total number of Mn atoms. In some embodiments, the degree of peroxidation, z in MnO_{z} can be 1.970 ≤ z ≤ 2.000 corresponding to an average manganese oxidation state ranging from +3.940 to +4.000. Methods for treatment of MnO_{z} to increase the degree of peroxidation and average manganese oxidation state are described in U.S. Patent No. 6,162,561; U.S. Ser. No. 12/061,136, filed Apr. 2, 2008; and U.S. Ser. No. 12/103,366, filed Apr. 15, 2008. In some embodiments, the MnO_{z} also can be a chemically-prepared manganese dioxide (CMD).

In some embodiments, a chemically-prepared manganese dioxide (CMD) can be incorporated into a blend of cathode active materials including λ-MnO₂. CMD can be prepared by a variety of solution-based methods as described, for example, in U.S. Patent Nos. 2,956,860; 3,437,435; 5,277,890; 5,348,726; 5,391,365; and/or 5,532,084. In some embodiments, when a CMD is substituted for commercial EMD in the cathode of a conventional alkaline battery, the average discharge voltage and low rate specific capacity can increase relative to EMD.

In some embodiments, nickel oxyhydroxide (NiOOH) can be incorporated into a blend of cathode active materials including λ-MnO₂. NiOOH can be prepared via chemical oxidation of nickel hydroxide (Ni(OH)₂). Nickel oxyhydroxide can include β-NiOOH, CoOOH-coated β-NiOOH, γ-NiOOH, CoOOH-coated γ-NiOOH, a solid solution or intergrowth of β-NiOOH and γ-NiOOH, a solid solution or intergrowth of CoOOH-coated β-NiOOH and CoOOH-coated γ-NiOOH, and/or mixtures of CoOOH-coated and uncoated β-NiOOH and γ-NiOOH. Examples of nickel oxyhydroxides are described, for example, in U.S. Patent Nos. 6,492,062; 6,991,875; 7,273,680. Nickel hydroxide can include β-Ni(OH)₂, Co(OH)₂-coated β-Ni(OH)₂, α-Ni(OH)₂, Co(OH)₂-coated α-Ni(OH)₂, mixed phase α/β-Ni(OH)₂, Co(OH)₂-coated mixed phase α/β-Ni(OH)₂, and/or mixtures of Co(OH)₂-coated and uncoated α- and β-Ni(OH)₂. The Ni(OH)₂ can include approximately spherical, spheroidal or ellipsoidal particles having a mean average particle size ranging from, for example, about 2 to 50 microns (e.g., about 5 to 50 microns, about 10 to 40 microns, about 20 to 30 microns). Suitable chemical oxidants can include, for example, a basic solution of sodium hypochlorite (NaOCl), potassium hypochlorite (KOCl) or an aqueous solution of sodium peroxydisulfate (Na₂S₂O₈), potassium peroxydisulfate (K₂S₂O₈), or ammonium peroxydisulfate ((NH₄)₂S₂O₈), or ozone gas and/or oxygen gas. The Ni(OH)₂ also can be oxidized electrochemically to NiOOH. Oxidation of Ni(OH)₂ is described, for example, in U.S. Patent Nos. 7,569,306; 7,407,521; and 7,081,319. The NiOOH can include approximately spherical, spheroidal or ellipsoidal particles having a mean average particle size ranging from, for example, about 2 to 50 microns (e.g., about 5 to 50 microns, about 10 to 40 microns, about 20 to 30 microns). Tap density can range between about 1.9 g/cm³ and 2.4 g/cm³. In some embodiments, a CoOOH coating on the NiOOH particles can cover between 60 and 90% (e.g., between 70 and 90%, between 60 and 80%, or between 70-80%) of the surface of the NiOOH particles, and/or the particles can include between 2 and 15 wt% (e.g., between 5 and 10%, between 10 and 15%, or between 2 and 10 %) of CoOOH coating. The CoOOH coating also can include an optional dopant such as Na, K, Y, Yb, Er, and/or Ni. In addition, the NiOOH can be a metal-doped NiOOH wherein a portion of the Ni ions are substituted by a metal dopant, for example, Co, Mn, Fe, Al, La, Y, Cu, Zn, Mg, Ca, Sr, and Ba. Commercial β-NiOOH, and CoOOH-coated β-NiOOH can be obtained from, for example, Kansai Catalyst Co. (Osaka, Japan), Tanaka Chemical Co. (Fukui, Japan), Toda Advanced Materials, (Sarnia, Canada), Gold Sky Energy Materials Co. (Changsha, China) or Umicore-Canada Inc. (Alberta, Canada). In some embodiments, alkaline cells with cathodes containing CoOOH-coated, Co bulk-doped β-NiOOH replacing the commercial EMD typically can have higher OCV and CCV values, and from 60 to 70% greater specific capacities at relative high discharge rates. The discharge performances of typical alkaline cells including β-NiOOH are described, for example, in U.S. Patent Nos. 6,566,009; 6,991,875; 7,273,680.

According to the invention, the one or more cathode active materials can include a partially delithiated LiNiO₂ having a layered crystal structure. Crystalline, layered, nominally stoichiometric LiNiO₂ can be prepared by a solid state synthesis method as described, for example, in U.S. Patent Nos. 5,720,932 and 5,783,334. Single phase LiNiO₂ also can be prepared from NiOOH via H⁺/Li⁺ ion-exchange reaction in aqueous LiOH solution described, for example, by J. Maruta et al. (Journal of Power Sources, 90, 2000, 89-94) and Y. Sun et al. (Solid State Ionics, 177, 2006, 1173-7). In some embodiments, lithium ions can he removed from LiNiO₂ via treatment with an aqueous 6M sulfuric acid solution at between 0 and 5°C for up to 20 hours to form a partially delithiated product having a nominal formula of Li₁₋ₓH_{y}NiO₂ where 0.1 ≤ x ≤ 0.9 and 0.1 ≤ y ≤ 0.9. For example, the lithium content can be about 0.9 wt% and the hydrogen content about 0.2 wt% after the acid treatment, corresponding to a calculated stoichiometry for the delithiated product of Li_{0.11}H_{0.2}NiO₂. In some embodiments, particle size of the delithiated product can range from about 1 to 8 µm with an average specific surface area of about 1.4 m²/g. In other embodiments, the delithiated nickel dioxide can be partially substituted (e.g., about 8 wt% Ni) for commercial EMD in the cathode of a conventional alkaline battery. Batteries with cathodes including the active material blend can have increased OCV (e.g., about 1.95 V) and average CCV values. The high-rate intermittent discharge performance (e.g., ANSI digital camera test) of a battery including a blend of the delithiated nickel oxide and EMD can be increased by up to 70-100% (e.g., 80-100%, or 80-90%) compared to that of batteries with cathodes including commercial EMD as the only active materials. Methods for preparation of Li₁₋ₓH_{y}NiO₂ and discharge performance of batteries with cathodes including Li₁₋ₓH_{y}NiO₂ and blends or composites of Li₁₋ₓH_{y}NiO₂ and EMD or acid-treated EMD are described, for example, in Attorney Docket 08935-0359001, filed concurrently with the present application.

In some embodiments, the second cathode active material can include a silver-containing metal oxide. Silver-containing metal oxides can include monovalent silver oxide (Ag₂O), divalent silver oxide (AgO), a ternary silver copper oxide having the formula AgCuO₂, a partially reduced ternary silver copper oxide having the formula Ag₂Cu₂O₃, and/or a ternary silver nickel oxide having the formula AgNiO₂. Alkaline cells with cathodes including blends of binary silver oxides such as Ag₂O and/or AgO and EMD as the active materials are described, for example, in U.S. Patent Nos. 3,520,729; 4,136,236; 4,192,914. Methods for synthesis of ternary silver copper oxides such as AgCuO₂ and Ag₂Cu₂O₃ and also alkaline cells with cathodes including the ternary silver copper oxides are described, for example, in U.S. Patent No. 6,753,109. Alkaline cells with cathodes including a ternary silver copper oxide as the active material can provide greater fresh gravimetric discharge capacity than cells including EMD. Alkaline cells with cathodes including blends of ternary silver copper oxides and EMD as the active material are described in U.S. Patent No. 6,759,166. Alkaline cells with cathodes including the ternary silver nickel oxide and blends of the ternary silver nickel oxide and EMD and/or silver oxide are described in U.S. Patent No. 6,794,082. Alkaline cells with cathodes including a quaternary silver cobalt nickel oxide and blends of the quaternary silver cobalt nickel oxide and EMD and/or silver oxide are described, for example, in U.S. Patent Application Publication No. US 2010/0003596 A1.

In some embodiments, to improve discharge performance of cathode active materials in an alkaline cell, one or more cathode active materials having different average particle size distributions are selected to increase the packing density (e.g., bulk or tap density) of a blend thereof. In addition, it is believed that by changing the microstructure of particles of the cathode active material, including secondary particle size (i.e., mean average size of agglomerates or aggregates of primary particles), micro-porosity, mesoporosity, and/or specific surface area of the particles, the performance of alkaline cells including the cathode active material can be improved. For example, secondary particles having a smaller mean average particle size can have larger specific surface areas than larger size particles of the same material. In some embodiments, smaller average particle sizes and/or different particle size distributions can be generated by mechanically milling secondary particles of the cathode active material. Suitable methods for mechanical milling secondary particles of the cathode active materials include, for example, ball milling, roller milling, jet milling, small media milling, impact milling, and impingement milling.

In some embodiments, a milled cathode active material component of a blend can have a mean average particle diameter of 20 micrometers or less (e.g., 10 micrometers or less, 5 micrometers or less, or 2 micrometers or less). The milled component can be blended with a second cathode active material having a different mean average particle diameter or particle size distribution. The second active material can have a mean average particle diameter of 20 micrometers or more (e.g., 30 micrometers or more, or 40 micrometers or more). For example, the second active material can be EMD, acid-treated EMD, or ozone-treated EMD. Once blended or mixed, the blend can have enhanced particle packing compared to a single cathode active material having particles of a uniform size with a single size distribution, as the milled component active material can pack into interstitial spaces between particles of the second cathode active material thereby increasing bulk or tap density of the blend. The amount of a relatively small-sized component to incorporate into a blend can depend on the particle size of the second cathode active material. For example, a blend having a second cathode active material with a relatively large mean average particle size can include a relatively large proportion of the relatively small-sized milled component. Alternatively, a blend having a second active material with a relatively small mean average particle size can include a smaller proportion of the relatively small sized milled component.

### Blend compositions

To make a blend, the λ-MnO₂ and the one or more additional cathode active materials can be blended together manually, for example, using a mortar and pestle; mechanically, using mixing equipment such as a V-blender, a stirred ball mill, a roller or jar mill, a blade mill, a high-energy ball mill (e.g., a high-speed bead mill), a planetary ball mill, a centrifugal ball mill, a Turbula^{®} shaker-mixer, and/or a vibroenergy mill; and/or by mechanochemical processing, as described, for example, in U.S. Patent No. 6,620,550. In some embodiments, prior to blending with the one or more additional cathode active materials, one or more components of the blend, for example, λ-MnO₂, are subjected to mechanical processing, such as high-energy ball milling with an oxidation-resistant graphite. Without wishing to be bound by theory, it is believed that the high-rate discharge performance of a battery with a cathode including a mixture of an oxidation-resistant graphite and one or more cathode active materials subjected to high-energy ball milling can be improved because of increased inter-particle contact between the graphite and active material particles that can provide increased electronic conductivity of the cathode. It is further believed that high-energy ball milling of a mixture of λ-MnO₂ and an oxidation-resistant graphite can mechanochemically reduce a portion of the Mn(IV) on the surface of λ-MnO₂ particles to Mn(III) thereby producing a decrease in OCV (e.g., by 75 mV, by 50 mV, by 25 mV) as well as initial CCV (e.g., by 50 mV, by 25 mV). Decreasing the OCV of blends of cathode active materials including λ-MnO₂ is desirable because a high OCV can promote evolution of oxygen from oxidation of the electrolyte (i.e., self-discharge).

In some embodiments, a blend of cathode active materials can include λ-MnO₂ and an acid-treated EMD. The blend can have a λ-MnO₂ to acid-treated EMD weight ratio of 9: 1 or less (e.g., 4:1 or less, 7:3 or less, or 1:1 or less) and/or 1:19 or more (e.g., 1:9 or more, 1:4 or more, 3:7 or more, 1:1 or more). For example, the blend can include 5% or more (e.g., 10% or more, 20% or more, or 30% or more, or 50% or more) and/or 90% or less (e.g., 80% or less, 70% or less, 50% or less) by weight of λ-MnO₂. The blend can include 10% or more (e.g., 20% or more, 30% or more, or 50% or more) and/or 95% or less (e.g., 90% or less, 80% or less, or 70% or less, or 50% or less) by weight of acid-treated EMD.

The λ-MnO₂ and acid-treated EMD blend can provide a battery with higher initial CCV than batteries including either λ-MnO₂ or an EMD as the only cathode active material, and/or a specific discharge capacity to a 0.8V cutoff voltage that is greater than batteries including either acid-treated or untreated EMD as the only cathode active material. For example, a battery including a blend of λ-MnO₂ and acid-treated EMD can have a CCV below about 50% depth of discharge (DOD) that ranges from 25 to 100 mV greater than that of batteries including only λ-MnO₂. A battery including a blend of λ-MnO₂ and acid-treated EMD can have a specific capacity when discharged at a relative low rate of 10 mA/g active material to a 0.8V cutoff voltage of 3% or more (e.g., 4% or more, 5% or more, 8% or more) than a battery including acid-treated EMD as the only cathode active material. In some embodiments, improved discharge performance can be observed when the weight fraction of λ-MnO₂ is substantially less than that of the acid-treated EMD (e.g., 1:9, 1:4).

In some embodiments, a blend of λ-MnO₂ and acid-treated EMD can provide a battery with increased discharge capacity relative to a sum of the anticipated proportional capacities of batteries including either λ-MnO₂ or acid-treated EMD. For example, a battery including a blend of 50% by weight λ-MnO₂ and 50% by weight acid-treated EMD can have a specific capacity of 321 mAh/g when discharged at a relative low rate of about 10 mA/g active material. This specific capacity is about 104% of that calculated from the sum of 50% of the specific capacity of an analogous battery including only λ-MnO₂ (e.g., 319 mAh/g) and 50% of the specific capacity of an analogous battery including only acid-treated EMD (e.g., 296 mAh/g) both discharged at the same rate as the battery including the 1:1 blend of λ-MnO₂ and acid-treated EMD.

In some embodiments, a blend can include λ-MnO₂ and an ozone gas-treated EMD (O-EMD). The blend can have a λ-MnO₂ to O-EMD weight ratio of 9:1 or less (e.g., 4:1 or less, 7:3 or less, or 1:1 or less) and/or 1:19 or more (e.g., 1:9 or more, 1:4 or more, 3:7 or more, 1:1 or more). For example, the blend can include 5% or more (e.g., 10% or more, 20% or more, or 30% or more, 50% or more) and/or 90% or less (e.g., 80% or less, 70% or less, or 50% or less) by weight of λ-MnO₂. The blend can include 10% or more (e.g., 20% or more, 30% or more, or 50% or more) and/or 95% or less (e.g., 90% or less, 80% or less, 70% or less, or 50% or less) by weight of ozone gas-treated EMD.

A battery including a blend of λ-MnO₂ and O-EMD can have a higher initial CCV and a discharge capacity to a 0.8V cutoff voltage that is greater than that for cells containing λ-MnO₂ or a standard commercial EMD as the only active cathode material. The fraction of λ-MnO₂ can be less than that of the O-EMD and still provide improved performance. For example, a battery including a blend of λ-MnO₂ and O-EMD can have an initial CCV that is higher than that of batteries including only λ-MnO₂ or a standard commercial EMD and comparable to that of batteries including a blend of λ-MnO₂ and acid-treated EMD. When discharged at a relative low rate of 10 mA/g active material to a 0.8V cutoff voltage, a battery including a blend of λ-MnO₂ and O-EMD can have a fresh specific discharge capacity that is greater than that of a battery including O-EMD as the only cathode active material and comparable to that of batteries including a blend of λ-MnO₂ and acid-treated EMD as the cathode active material. In some embodiments, improved battery performance can be observed when the weight fraction of λ-MnO₂ is less than that of O-EMD.

In some embodiments, a blend can include λ-MnO₂ and a nickel oxide having nickel in an average oxidation state equal to or greater than +3. For example, the nickel oxide can include a nickel oxyhydroxide (NiOOH), such as β-NiOOH and/or γ-NiOOH; a cobalt oxyhydroxide-coated NiOOH, such as CoOOH-coated β-NiOOH and/or CoOOH-coated γ-NiOOH; and/or a delithiated, layered lithium nickel oxide having the general formula Li₁₋ₓH_{y}NiO₂, where 0.1 ≤ x ≤ 0.9; 0.1 ≤ y ≤ 0.9. For example, the blend can have a λ-MnO₂ to CoOOH-coated β-NiOOH weight ratio of 9:1 or less (e.g., 4:1 or less, 7:3 or less, or 1:1 or less) and/or 1:9 or more (e.g., 1:4 or more, 3:7 or more, 1:1 or more). For example, the blend can include 10% or more (e.g., 20% or more, 30% or more, or 40% or more, or 50% or more) and/or 90% or less (e.g., 80% or less, 70% or less, or 50% or less) by weight of λ-MnO₂. The blend can include 10% or more (e.g., 20% or more, 30% or more, or 50% or more) and/or 50% or less (e.g., 70% or less, 80% or less, or 90% or less) by weight of CoOOH-coated β-NiOOH.

Batteries including a blend of λ-MnO₂ and CoOOH-coated β-NiOOH having an average nickel oxidation state of about +3 can provide a substantially higher initial CCV than batteries including λ-MnO₂ as the only cathode active material. For example, a battery including a blend of λ-MnO₂ and CoOOH-coated β-NiOOH as the cathode active material can have an initial CCV value ranging from about 250 to 380 mV higher than a battery including λ-MnO₂ as the only cathode active material when both are discharged at a relative low rate (e.g., about 10 mA/g active material). For comparison, a battery including CoOOH-coated β-NiOOH as the only cathode active material can have a CCV value ranging from about 265 mV to 435 mV higher than a battery including λ-MnO₂ as the only cathode active material, up to a DOD of about 80%. Batteries including a blend of λ-MnO₂ and CoOOH-coated β-NiOOH also can provide greater specific capacity when discharged at a relative low rate (e.g., about 10 mA/g active material) to a 0.8V cutoff voltage than batteries containing CoOOH-coated β-NiOOH as the only cathode active material. For example, when discharged at a relative low rate (e.g., about 10 mA/g active material) to a 0.8V cutoff voltage, a battery including a blend of λ-MnO₂ and CoOOH-coated β-NiOOH can have a fresh specific capacity of 10% or more (e.g., 20% or more, 25% or more, 30% or more) and/or 40% or less (e.g., 30% or less, 20% or less, 10% or less) than a battery including CoOOH-coated β-NiOOH as the only cathode active material, discharged under the same conditions. In some embodiments, improved battery performance can be observed when the weight fraction of λ-MnO₂ is less than that of CoOOH-coated β-NiOOH.

In some embodiments, a battery including a blend of λ-MnO₂ and CoOOH-coated β-NiOOH as the active cathode material can have a lower open circuit voltage (e.g., OCV) than batteries including CoOOH-coated β-NiOOH as the only cathode active material. Typically, batteries having lower OCV values undergo less self-discharge via decomposition of electrolyte to generate oxygen gas during storage and have improved shelf life.

In some embodiments, a blend of λ-MnO₂ and CoOOH-coated β-NiOOH can provide a battery with increased discharge capacity relative to a sum of the calculated proportional capacities of batteries including either λ-MnO₂ or CoOOH-coated β-NiOOH as the only active cathode material. For example, a battery including a blend of 70% by weight λ-MnO₂ and 30% by weight CoOOH-coated β-NiOOH can have a specific capacity of 287 mAh/g when discharged at a relative low rate (e.g., about 10 mA/g active material). This specific capacity is about 102% of that calculated from the sum of 70% of the specific capacity of an analogous battery including only λ-MnO₂ (e.g., 317 mAh/g) and 30% of the specific capacity of an analogous battery including only CoOOH-coated β-NiOOH (e.g., 225 mAh/g), both discharged at the same rate as the battery including the blend.

According to the invention the blend includes λ-MnO₂ and a nickel oxide having nickel in an average oxidation state equal to or greater than +3 and less than or equal to +4 (e.g., greater than +3.5 and less than +4, greater than +3.75 and less than +4). For example, the nickel oxide can be a delithiated, layered lithium nickel oxide having the formula Li₁₋ₓH_{y}NiO₂, where 0.1≤ x ≤ 0.9; 0.1 ≤ y ≤ 0.9. The blend can have a λ-MnO₂ to Li₁₋ₓH_{y}NiO₂ weight ratio of 19:1 or less (e.g., 9:1 or less, 4:1 or less, 7:3 or less, 1:1 or less). For example, the blend can include 50 % or more (e.g., 70% or more, 80% or more, or 90% or more, or 95% or more) by weight of λ-MnO₂. The blend can include 5% or more (e.g., 10% or more, 20% or more, or 30% or more) and/or 50% or less (e.g., 30% or less, 20% or less, or 10% or less) by weight of Li₁₋ₓH_{y}NiO₂.

Batteries including a blend of λ-MnO₂ and Li₁₋ₓH_{y}NiO₂ can provide a substantially higher initial CCV than batteries including λ-MnO₂ as the only cathode active material. For example, a battery including a blend of λ-MnO₂ and Li₁₋ₓH_{y}NiO₂ as the cathode active material can have an initial CCV value ranging from about 110 to 270 mV higher than a battery including λ-MnO₂ as the only cathode active material when both are discharged at a relative low rate (e.g., about 10 mA/g active material). For comparison, a battery including Li₁₋ₓH_{y}NiO₂ as the only cathode active material can have a CCV value ranging from about 150 mV to 330 mV higher than a battery including λ-MnO₂ as the only cathode active material depending on DOD of the battery including λ-MnO₂. Batteries including a blend of λ-MnO₂ and Li₁₋ₓH_{y}NiO₂ also can provide greater specific capacity when discharged at a relative low rate (e.g., about 10 mA/g active material) to a 0.8V cutoff voltage than batteries containing λ-MnO₂ as the only cathode active material. For example, a battery including a blend of λ-MnO₂ and Li₁₋ₓH_{y}NiO₂ can have a fresh specific capacity when discharged at a relative low rate (e.g., about 10 mA/g active material) to a 0.8V cutoff voltage of 2% or more (e.g., 3% or more, 5% or more, 8% or more) and/or 10% or less (e.g., 8% or less, 5% or less, 3% or less) than a battery including λ-MnO₂ as the only cathode active material discharged under the same conditions.

In some embodiments, a battery including a blend of λ-MnO₂ and Li₁₋ₓH_{y}NiO₂ as the active cathode material can have a lower OCV value than batteries including Li₁₋ₓH_{y}NiO₂ as the only cathode active material. For example, a battery including Li₁₋ₓH_{y}NiO₂ as the only cathode active material can have an OCV value of 1.85 V or higher. In comparison, a battery including a blend of λ-MnO₂ and Li₁₋ₓH_{y}NiO₂ with a weight ratio of 17:3 (i.e., about 15% Li₁₋ₓH_{y}NiO₂ by weight) as the active cathode material can have an OCV value of about 1.72 V, comparable to that of a battery including λ-MnO₂ as the only cathode active material. Batteries having lower OCV values can undergo less self-discharge via decomposition of electrolyte to generate oxygen gas during storage, resulting in an improved shelf life.

In some embodiments, a blend can include λ-MnO₂ and a silver oxide such as monovalent binary silver oxide (Ag₂O), divalent binary silver oxide (AgO), silver ternary copper oxide (AgCuO₂), a ternary partially reduced silver copper oxide (Ag₂Cu₂O₃), ternary silver nickel oxide (AgNiO₂), or a quaternary silver cobalt nickel oxide (AgₓCO_{y}Ni_{z}O₂). For example, the silver oxide can be Ag₂O. The blend can have a λ-MnO₂ to Ag₂O weight ratio of 9:1 or less (e.g., 7:3 or less, 4:1 or less, or 1:1 or less) and/or 1:1 or more (e.g., 4:1 or more, 7:3 or more, 9:1 or more). For example, the blend can include 90% or more (e.g., 80% or more, 70% or more, or 50% or more) and/or 90% or less (e.g., 80% or less, 70% or less, or 50% or less) by weight of λ-MnO₂. The blend can include 10% or more (e.g., 20% or more, 30% or more, or 50% or more) and/or 50% or less (e.g., 30% or less, 20% or less, or 10% or less) by weight of Ag₂O.

A battery including a blend of λ-MnO₂ and Ag₂O can have a higher OCV, a higher initial CCV, and/or a specific discharge capacity to a 0.8V cutoff voltage that is greater than batteries containing either λ-MnO₂ or Ag₂O as the only active cathode material. For example, a battery including a blend of λ-MnO₂ and Ag₂O can have an initial average CCV that ranging from about 100 to 250 mV higher than that of a battery including only λ-MnO₂ as the only active cathode material. When discharged at a relative low rate (e.g., about 10 mA/g active material) to a 0.8V cutoff voltage, a battery including a blend of λ-MnO₂ and Ag₂O can have a fresh specific capacity of 25% or more (e.g., 30% or more, 40% or more, or 50% or more) and/or 60% or less (e.g., 50% or less, 40% or less, or 30% or less) than a battery including Ag₂O as the only cathode active material. A battery including a blend of λ-MnO₂ and Ag₂O can have an OCV about 200 mV higher than a battery including Ag₂O as the only cathode active material and less than 50 mV higher than a battery including λ-MnO₂ as the only cathode material.

In some embodiments, a blend of λ-MnO₂ and Ag₂O can provide a battery with increased discharge capacity relative to a sum of the calculated proportional capacities of batteries including either λ-MnO₂ or Ag₂O as the only cathode active material. For example, a battery including a blend of 90% by weight λ-MnO₂ and 10% by weight Ag₂O can have a specific capacity of 346 mAh/g when discharged at a relative low rate (e.g., about 10 mA/g active material) to a 0.8V cutoff voltage. This capacity is about 112% of the value (e.g., 308 mAh/g) calculated from the sum of 90% of the capacity of an analogous battery including only λ-MnO₂ (e.g., 317 mAh/g) and 10% of the capacity of an analogous battery including only Ag₂O (e.g., 223 mAh/g).

Various other second cathode active materials can be used advantageously in blends with λ-MnO₂ including, for example, a complex bismuth metal oxide including one or more metals and pentavalent bismuth, such as silver bismuthate (i.e., AgBiO₃), zinc bismuthate, and/or magnesium bismuthate; a complex ferrate including one or more metals and hexavalent iron, such as potassium ferrate (K₂FeO₄), barium ferrate (BaFeO₄), strontium ferrate (SrFeO₄), silver ferrate (Ag₂FeO₄), and/or cesium ferrate (Cs₂FeO₄); binary copper oxides such as cupric oxide (CuO) and/or cuprous oxide (Cu₂O); ternary copper oxides such as silver copper(III) oxide (AgCuO₂) and/or partially reduced silver copper oxide (Ag₂Cu₂O₃); a ternary silver nickel oxide (AgNiO₂); a quaternary silver cobalt nickel oxide (AgₓCo_{y}Ni_{z}O₂, wherein x+y+z = 2, x ≤ 1.10, y >0), and a partially fluorinated graphite having the general formula (CFₓ)ₙ wherein 0.25 ≤ x ≤ 0.60. Additional cathode active materials having average discharge voltages in the range of about 1.2 V to 1.7 V can be included as second or third cathode active materials. Such additional cathode active materials can have discharge curves with voltage profiles including one or more flat plateaus. The blend can have a λ-MnO₂ to second cathode active material weight ratio of 19: 1 or less (e.g., 9:1 or less, 4:1 or less, 7:3 or less, or 1:1 or less) and/or 1:19 or more (e.g., 1:9 or more, 1:4 or more, 3:7 or more, 1:1 or more). For example, the blend can include 5% or more (e.g., 10% or more, 20% or more, or 30% or more, or 50% or more) and/or 95% or less (e.g., 90% or less, 80% or less, 70% or less, 50% or less) by weight of λ-MnO₂. The blend can include 5% or more, 10% or more (e.g., 20% or more, 30% or more, or 50% or more) and/or 95% or less (e.g., 90% or less, 80% or less, or 70% or less, or 50% or less) by weight of a second cathode active material.

In some embodiments, blends can include λ-MnO₂ and two or more additional cathode active materials (e.g., a second cathode active material, a third cathode active material). For example, the blend can include 60% or more (e.g., 70% or more, 80% or more, or 90% or more) and/or 90% or less (e.g., 80% or less, 70% or less, or 60% or less) by weight of λ-MnO₂; 5% or more (e.g., 10% or more, 20% or more, or 30% or more) and/or 30% or less (e.g., 20% or less, 10% or less, or 5% or less) by weight of a second cathode active material; or 5% or more (e.g., 10% or more, 20% or more, or 30% or more) and/or 30% or less (e.g., 20% or less, 10% or less, or 5% or less) by weight of a third cathode active material. For example, the blend can include λ-MnO₂, CoOOH-coated β-NiOOH as the second cathode active material, and Ag₂O as the third cathode active material. The blend can provide a battery having a greater total discharge capacity compared to batteries including λ-MnO₂, CoOOH-coated β-NiOOH, or Ag₂O as the only cathode active material. For example, a battery including a blend of cathode active materials including 80% by weight λ-MnO₂, 10% by weight CoOOH-coated β-NiOOH, and 10% by weight Ag₂O can have a fresh specific capacity when discharged at a relative low rate of about 10 mA/g total active material to a 0.8 V cutoff voltage of about 330 mAh/g. This value is more than 104% of the capacity of an analogous battery including λ-MnO₂ as the only cathode active material, more than 147% of the capacity of an analogous battery including Ag₂O as the only cathode active material, and more than 145% of an analogous battery including CoOOH-coated β-NiOOH as the only cathode active material. Also, this value is more than 110% of the capacity of an analogous battery including a blend of 10% by weight CoOOH-coated β-NiOOH and 90% by weight λ-MnO₂. In addition, this value is 95% of the capacity of an analogous battery including a blend of 10% by weight Ag₂O and 90% by weight λ-MnO₂. The initial CCV of batteries including a blend of two or more cathode active materials can be greater than a battery including a single cathode active material component. For example, the initial CCV (e.g., at less than 30% DOD) of a battery including a blend of cathode active materials including 80% by weight λ-MnO₂, 10% by weight Co00H-coated β-NiOOH, and 10% by weight Ag₂O can range from about 100 mV to 250 mV higher than the initial CCV of a battery including λ-MnO₂ as the only cathode active material when discharged at a relative low rate of about 10 mA/g total active material to a 0.8 V cutoff voltage. In some embodiments, a blend including two or more additional cathode active materials can be included in a battery to fine tune the discharge voltage profile of a majority cathode active material, for example, increasing the initial CCV and flattening the initial sloping portion of the discharge curve of λ-MnO₂.

### Composite compositions

To make a composite of λ-MnO₂ and one or more additional cathode active materials, a mixture of a nominally stoichiometric LiMn₂O₄ spinel and suitable precursors to the one or more additional cathode active materials can be treated, for example, with an aqueous acid solution at low temperature, to simultaneously generate λ-MnO₂ and the one or more additional cathode active materials in the form of a composite. The mixture of spinel and one or more precursors to the one or more additional cathode active materials can be prepared manually, for example, using a mortar and pestle or mechanically using typical powder mixing equipment such as a V-blender, a stirred ball mill, a roller or jar mill, a blade mill, a high-energy ball mill, a planetary ball mill, a centrifugal ball mill, a shaker-mixer, a vibroenergy mill, and the like. In some embodiments, one or more components of the mixture can be subjected to additional mechanical processing to reduce particle size in order to increase reactivity during acid treatment.

In some embodiments, the mixture of precursors to the cathode active materials in the composite can include a nominally stoichiometric LiMn₂O₄ spinel and a commercial EMD. The mixture can have a LiMn₂O₄ to EMD weight ratio of 9:1 or less (e.g., 4:1 or less, 7:3 or less, 1:1 or less) and/or 1:19 or more (e.g., 1:9 or more, 1:4 or more, 3:7 or more, 1:1 or more). For example, the mixture can include 5% or more (e.g., 10% or more, 20% or more, 30% or more, 50% or more) and/or 95% or less (e.g., 90% or less, 80% or less, 70% or less, 50% or less) by weight LiMn₂O₄ spinel. The mixture can include 10% or more (e.g., 20% or more, 30% or more, 50% or more) and/or 95% or less (e.g., 90% or less, 80% or less, 70% or less, 50% or less) by weight EMD. Because of the loss of both lithium and manganese from the spinel and a slight loss of manganese from the EMD resulting from delithiation and/or disproportionation of Mn(III) during the acid extraction treatment as shown in Equation 3, the weight ratio of λ-MnO₂ to acid-treated EMD in the composite can differ from the initial weight ratio of spinel to EMD in the starting mixture. For example, composites prepared from mixtures of spinel and EMD having weight ratios of 1:9, 1:4, 3:7, and 1:1 have λ-MnO₂ to acid-treated EMD weight ratios corrected for loss of lithium and manganese of 1:12, 10:53, 10:31, and 10:13, respectively.

2 LiMn⁴⁺Mn³⁺O₄ + 4H⁺ → 3 λ-Mn⁴⁺O₂ + Mn²⁺ + 2Li⁺ + 2H₂O (3)

Composites of λ-MnO₂ and acid-treated EMD can be used to provide batteries having higher initial CCV values than batteries including either λ-MnO₂ or commercial] EMD as the only cathode active material, and/or average gravimetric discharge capacities greater than batteries including either acid-treated or untreated EMD as the only cathode active material. For example, a battery including a composite of λ-MnO₂ and acid-treated EMD can have an average gravimetric capacity of 2% or more (e.g., 5% or more, 10% or more, 15% or more) than a battery including acid-treated EMD as the only cathode active material, when discharged at a relative low rate (e.g., 10 mΛ/g total active) to a 0.8 V cutoff voltage. In some embodiments, a battery including a composite of λ-MnO₂ and acid-treated EMD can have an average gravimetric capacity of 1% or more (e.g., 2% or more, 3% or more, 5% or more) than a battery including a blend of λ-MnO₂ and acid-treated EMD having the same nominal weight ratio. For example, batteries including a composite of λ-MnO₂ and acid-treated EMD in a 10:13 weight ratio prepared from a mixture of spinel and EMD in a 1:1 weight ratio can have an average gravimetric capacity of 329 mAh/g when discharged at a relative low rate (e.g., 10 mA/g active) to a 0.8 V cutoff voltage. This value corresponds to about 102% of the average capacity of comparable batteries including a blend of λ-MnO₂ and acid-treated EMD in a 1:1 weight ratio. However, such a composite actually includes only about 86% as much λ-MnO₂ by weight as a 1:1 blend of λ-MnO₂ and acid-treated EMD.

In some embodiments, used to arrive at the cathode of the present invention, a composite of λ-MnO₂ and acid-treated EMD can provide a battery having increased average discharge capacity relative to a sum of the anticipated proportional capacities of batteries including either λ-MnO₂ or acid-treated EMD as the only cathode active material. For example, a battery including a composite of λ-MnO₂ and acid-treated EMD in a 10:13 weight ratio can have an average gravimetric capacity of 329 mAh/g. This value is about 108% of the value calculated from the sum of 43% of the capacity of a battery including only λ-MnO₂ as the cathode active material and 57% of the capacity of a battery including only acid-treated EMD as the cathode active material, both discharged at the same rate to the same cutoff voltage as the battery including the composite.

In some embodiments, the mixture of precursors to the cathode active materials in the composite can include a nominally stoichiometric LiMn₂O₄ spinel and a layered lithium nickel oxide, LiNiO₂. Treatment of a mixture of LiMn₂O₄ spinel and LiNiO₂ with an aqueous acid solution at low temperature can simultaneously generate λ-MnO₂ and a nickel oxide having an average nickel oxidation state greater than +3 and less than +4 (e.g., between +3.20 and +3.80, between +3.50 and +3.75) in the form of a composite. For example, the nickel oxide in the composite can be a delithiated, layered nickel oxide having the formula Li₁₋ₓH_{y}NiO₂, where 0.1≤ x ≤ 0.9; 0.1 ≤ y ≤ 0.9. The composite can have a λ-MnO₂ to Li₁₋ₓH_{y}NiO₂ weight ratio of 19:1 or less (e.g., 9:1 or less, 4:1 or less; 7:3 or less; 1:1 or less) and/or 1:9 or more (e.g., 1:4 or more, 3:7 or more, 1:1 or more). For example, the composite can include 10% or more (e.g., 20% or more, 30% or more, 50% or more) and/or 95% or less (e.g., 90% or less, 80% or less, 70% or less, 50% or less) by weight λ-MnO₂. The composite can include 5% or more (e.g., 10% or more, 20% or more, 30% or more, 50% or more) and/or 90% or less (e.g., 80% or less, 70% or less, 50% or less) by weight Li₁₋ₓH_{y}NiO₂.

A battery including a composite of λ-MnO₂ and Li₁₋ₓH_{y}NiO₂ can provide a substantially higher initial CCV as well as a greater average gravimetric capacity when discharged at a relative low rate (e.g., 10 mA/g total active) to a 0.8 V cutoff voltage than a battery including λ-MnO₂ as the only cathode active material. Further, a battery including a composite of λ-MnO₂ and Li₁₋ₓH_{y}NiO₂ can have a lower OCV value than a battery including Li₁₋ₓH_{y}NiO₂ as the only cathode active material. Typically, batteries with lower OCV values undergo less self-discharge via decomposition of electrolyte to generate oxygen gas during storage and can have improved shelf life.

### Batteries including blends or composites

In general, a blend or a composite of cathode active materials can provide a higher specific gravimetric capacity when incorporated into a battery, for example, a capacity increase of at least 2% (e.g., at least 5%, at least 10%, or at least 20%) and/or at most 30% (e.g., at most 20%, at most 10%, or at most 5%) relative to the capacity of a battery including a single component of the blend or composite. In some embodiments, the blend or composite can provide batteries having increased capacities at relative high (e.g., 100 mA/g active or more) discharge rates as well as relative low (e.g., 10 mA/g active or less) discharge rates. For example, a battery including either a blend or composite of λ-MnO₂ and a second cathode active material can have a specific discharge capacity of 320 mAh/g active or more (e.g., 330 mAh/g active or more, 340 mAh/g active or more, 350 mAh/g active or more) at a relative low drain rate of 10 mA/g active or less to a 0.8 V cutoff voltage. In some embodiments, a battery including either a blend or composite of λ-MnO₂ and a second cathode active material can have an increase in discharge voltage (i.e., CCV) ranging from about 50 mV to 300 mV over a range of 20% to 80% DOD compared to a battery including a single component of the blend or composite. In some embodiments, a battery including the blend or composite can have increased capacity retention after storage.

When incorporated into a battery, a blend or composite of λ-MnO₂ and a second cathode active material can provide a battery having an average discharge voltage of about 1.2 V or more (e.g., 1.3 V or more, 1.4 V or more, or 1.5 V or more, or 1.6V or more) and/or 1.75 V or less (e.g., 1.6 V or less, 1.5 V or less, 1.4 V or less, or 1.3 V or less). Average discharge voltage can be defined as the CCV at 50% DOD of the battery. The blend or composite can provide a battery having a higher average discharge voltage compared to batteries including a single cathode active material component of the blend or composite. The blend or composite also can provide a higher average discharge voltage compatible with the initial CCV of conventional EMD-Zn primary alkaline batteries, and can replace EMD in these conventional batteries, either in part or in full. When incorporated into a battery, a blend or composite of λ-MnO₂ and a second cathode active material can provide a battery having a greater gravimetric energy density than a conventional alkaline battery including, for example, a commercial EMD as the only cathode active material.

In some embodiments, cathode 12, including a blend or composite of λ-MnO₂ and one or more additional cathode active materials, can include between 50 percent and 95 percent by weight (e.g., between 60 percent and 90 percent by weight, or between 70 percent and 85 percent by weight) of the blend or composite. For example, cathode 12 can include 50% or more (e.g., 60% or more, 70% or more, 80% or more, 90% or more) by weight, and/or 95% or less (e.g., 90% or less, 80% or less, 70% or less, or 60% or less) by weight of the blend or composite.

For example, battery 10 including the blend or composite can have a gravimetric specific capacity of 300 mAh/g or more, 320 mAh/g or more, 340 mAh/g or more, 350 mAh/g or more, and/or 360 mAh/g or less at a relative low discharge rate of about 10 mA/g or less to a cutoff voltage of 0.8 V. Battery 10 including cathode 12 including the blend or composite can have an open circuit voltage (OCV) of 1.75 V or less, 1.70 V or less, or 1.65 V or less, 1.60 V or less. Battery 10 also can have an average discharge voltage of 1.20 V or more, or 1.30 V or more, 1.40 V or more, 1.50 V or more, 1.60 V or more, and/or 1.65 or less when discharged at a relative low discharge rate of about 10 mA/g or less to a cutoff voltage of 0.8 V.

Cathode 12 including a blend or composite can further include between 3% and 35%, between 4% and 20%, between 5% and 10%, or between 6% and 8% by weight of an electrically conductive additive and 0.05% or more by weight and/or 5% or less by weight of an optional binder (e.g., a polymeric binder). Electrolyte solution can also be dispersed throughout cathode 12 and the amount added can range from about 1% to 7% by weight. All weight percentages relating to cathode 12 include the weight of the dispersed electrolyte in the total cathode weight (i.e.,"wet" weight).

In some embodiments, to enhance bulk electrical conductivity and stability of the cathode particles of λ-MnO₂ and/or the one or more additional cathode active materials within the blend or composite, the cathode particles can include an electrically conductive surface coating. Increasing the overall electrical conductivity of the cathode can enhance the total discharge capacity and/or average discharge voltage (e.g., at relative low discharge rates), as well as enhance the effective cathode utilization (e.g., at relative high discharge rates). The conductive surface coating can include a carbonaceous material, such as a natural or synthetic graphite, a carbon black, a partially graphitized carbon black, and/or an acetylene black. The conductive surface coating can include a metal, such as gold or silver and/or a conductive or semiconductive metal oxide, such as cobalt oxide (e.g., Co₃O₄), cobalt oxyhydroxide, silver oxide, antimony-doped tin oxide, zinc antimonate, indium oxide or indium tin oxide. The surface coating can be applied or deposited, for example, using solution techniques including electrodeposition, electroless deposition, by vapor phase deposition (e.g., sputtering, physical vapor deposition, or chemical vapor deposition) or by direct coating conductive particles to the surface of the active particles using a binder and/or coupling agent, as described, for example, by J. Kim et al. (Journal of Power Sources, 2005, 139, 289-294) and R. Dominko et al. (Electrochemical and Solid State Letters, 2001, 4(11), A187-A190). A suitable conductive coating thickness can be provided by applying the conductive surface coating at between 3 and 10 percent by weight (e.g., greater than or equal to 3, 4, 5, 6, 7, 8, or 9 percent by weight, and/or less than or equal to 10, 9, 8, 7, 6, 5, or 4 percent by weight) relative to the total weight of the cathode active material.

In addition, as indicated above, cathode 12 can include an electrically conductive additive capable of enhancing the bulk cathode electrical conductivity. The conductive additive can be blended with the blend or composite of λ-MnO₂ and the one or more additional cathode active materials prior to fabrication of cathode 12. Examples of conductive additives include graphite, carbon black, silver powder, gold powder, nickel powder, carbon fibers, carbon nanofibers, and/or carbon nanotubes. Preferred conductive additives include graphite particles, graphitized carbon black particles, carbon nanofibers, vapor phase grown carbon fibers, and single and multiwall carbon nanotubes. In certain embodiments, the graphite particles can be natural or non-synthetic, nonexpanded graphite particles, for example, NdG MP-0702X available from Nacional de Grafite (Itapecirica, Brazil) and FormulaBT™ grade available from Superior Graphite Co. (Chicago, IL). In other embodiments, the graphite particles can be expanded natural or expanded synthetic graphite particles, for example, Timrex^{®} BNB90 available from Timcal, Ltd. (Bodio, Switzerland), WH20 or WH20A grade from Chuetsu Graphite Works Co., Ltd. (Osaka, Japan), and ABG grade available from Superior Graphite Co. (Chicago, IL). In yet other embodiments, the graphite particles can be synthetic, non-expanded graphite particles, for example, Timrex^{®} KS4, KS6, KS15, MX15 available from Timcal, Ltd. (Bodio, Switzerland). The graphite particles can be oxidation-resistant, synthetic, non-expanded graphite particles. The term "oxidation resistant graphite" as used herein refers to a synthetic graphite made from high purity carbon or carbonaceous materials having a highly crystalline structure. The use of oxidation resistant graphite in blends with λ-MnO₂ can reduce the rate of graphite oxidation by λ-MnO₂ and/or by other highly oxidizing cathode active materials. Suitable oxidation resistant graphites include, for example, SFG4, SFG6, SFG10, SFG15 available from Timcal, Ltd., (Bodio, Switzerland). The use of oxidation resistant graphite in blends with another strongly oxidizing cathode active material, nickel oxyhydroxide, is disclosed in commonly assigned U.S.S.N. 11/820,781, filed June 20, 2007. Carbon nanofibers are described, for example, in commonly-assigned U.S.S.N. 09/658,042, filed September 7, 2000 and U.S.S.N. 09/829,709, filed April 10, 2001. Cathode 12 can include between 3% and 35%, between 4% and 20%, between 5% and 10%, or between 6% and 8% by weight of conductive additive.

An optional binder can be added to cathode 12 to enhance its structural integrity. Examples of binders include polymers such as polyethylene powders, polypropylene powders, polyacrylamides, and various fluorocarbon resins, such as polyvinylidene difluoride (PVDF) and polytetrafluoroethylene (PTFE). An example of a suitable polyethylene binder is available from Dupont Polymer Powders (Sàrl, Switzerland) under the tradename Coathylene HX1681. Cathode 12 can include, for example, from 0.05% to 5% or from 0.1% to 2% by weight of binder relative to the total weight of the cathode. Cathode 12 can also include other optional additives.

In some embodiments, when incorporated into an alkaline electrochemical cell, cathodes including λ-MnO₂ can generate soluble manganate ions (i.e., [Mn⁶+O4]²⁻) and/or permanganate ions (i.e., [Mn⁷⁺O₄]⁻), for example, when placed into contact with a KOH-containing electrolyte solution. Without wishing to be bound by theory, it is believed that soluble manganate ([Mn⁶⁺O₄]²⁻) ions and/or permanganate ([Mn⁷⁺O₄]⁻) ions can be formed along with Mn²⁺ ions in a Mn⁶⁺/Mn⁺ mole ratio of 1 by disproportionation of Mn⁴⁺ ions on the surface of the λ-MnO₂ particles in contact with a strongly alkaline (i.e., pH≥14) electrolyte solution according to Equation 4.

2 Mn⁴⁺O₂ + 40H⁻ → [Mn⁶⁺O_{4]}² + [Mn²⁺(OH)₄ ]²⁻ (4)

Formation of manganate and permanganate ions by EMD powders that had been treated with an aqueous acid solution (e.g., 9-10 M H₂SO₄) at 80 °C to 95 °C for several hours, washed thoroughly with water, and then placed in contact with a KOH electrolyte solution (e.g., 0.1-9 M KOH) is described, for example, by A. Kozawa (Journal of the Electrochemical Society of Japan, 1976, 44(8), 508-513). Without wishing to be bound by theory, it is believed that formation of manganate and permanganate ions occurred because the potential (i.e., OCV) of the acid-treated EMD was increased relative to untreated EMD such that in high pH solutions (e.g., pH 14), the solid MnO₂ phase was no longer thermodynamically stable relative to formation of soluble manganate and/or permanganate ions and Mn²⁺ ions. This situation is depicted in the equilibrium pH-potential diagram for Mn-H₂O at 25 °C as presented by M. J. N. Pourbaix (Atlas of Electrochemical Equilibriums in Aqueous Solutions, 2nd ed., 1974, Houston, Texas: National Association of Corrosion Engineers). It is further believed that the presence of manganate ions dissolved in the electrolyte of an alkaline cell can decrease hydrogen gassing by the zinc anode and thereby improve capacity retention during storage compared to a cell that does not include manganate ions dissolved in the electrolyte. An additional amount (e.g., <5 wt%) of a soluble metal manganate salt, for example, barium manganate, strontium manganate, silver manganate, and/or copper manganate can be optionally added to the cathode in addition to the λ-MnO₂ or substituted for a portion of the λ-MnO₂.

The electrolyte solution can be any of the electrolyte solutions commonly used in alkaline batteries. The electrolyte solution can be an aqueous solution of an alkali metal hydroxide such as KOH, NaOH or a mixture of alkali metal hydroxides, for example, KOH and NaOH. However, the electrolyte solution should not contain an appreciable concentration of Li⁺ ions because Li⁺ ions can undergo preferential insertion into the λ-MnO₂ lattice relative to protons, as discussed, for example, by X. Shen & A. Clearfield (Journal of Solid State Chemistry, 1986, 64, 270-282) and K. Ooi et al. (Chemistry Letters, 1988, 989-992). For example, the aqueous alkali metal hydroxide solution can include between about 20 and about 55 percent (e.g., between about 30 and about 50 percent, or between about 33 and about 45 percent) by weight of the alkali metal hydroxide. In some embodiments, the aqueous alkali metal hydroxide can include about 37% by weight KOH (i.e., about 9 M KOH). In some embodiments, the electrolyte solution also can include from 0 to about 6 percent by weight of a metal oxide, such as zinc oxide, for example, about 2 percent by weight zinc oxide.

Anode 14 can be formed of any of the zinc-based materials conventionally used in alkaline battery anodes. For example, anode 14 can be a gelled zinc anode that includes zinc metal particles and/or zinc alloy particles, a gelling agent, and minor amounts of additives, such as a gassing inhibitor. A portion of the electrolyte solution can be dispersed throughout the anode. The zinc particles can be any of the zinc-based particles conventionally used in gelled zinc anodes. The zinc-based particles can be formed of a zinc-based material, for example, zinc or a zinc alloy. Generally, a zinc-based particle formed of a zinc-alloy is greater than 75% zinc by weight, typically greater than 99.9% by weight zinc. The zinc alloy can include zinc (Zn) and at least one of the following elements: indium (In), bismuth (Bi), aluminum (Al), calcium (Ca), lead (Pb), gallium (Ga), lithium (Li), magnesium (Mg), and tin (Sn). The zinc alloy typically is composed primarily of zinc and preferably can include metals that can inhibit gassing, such as indium, bismuth, aluminum and mixtures thereof. As used herein, gassing refers to the evolution of hydrogen gas resulting from a reaction of zinc metal or zinc alloy with the electrolyte. The presence of hydrogen gas inside a sealed battery is undesirable because a pressure buildup can cause leakage of electrolyte. Preferred zinc-based particles are both essentially mercury-free and lead-free. Examples of zinc-based particles include those described in U.S. Patents 6,284,410; 6,472,103; 6,521,378; and commonly-assigned U.S. Application No. 11/001,693, filed December 1, 2004, all hereby. The terms "zinc", "zinc powder", or "zinc-based particle" as used herein shall be understood to include zinc alloy powder having a high relative concentration of zinc and as such functions electrochemically essentially as pure zinc. The anode can include, for example, between about 60% and about 80%, between about 62% and 75%, between about 63% and about 72%, or between about 67% and about 71% by weight of zinc-based particles. For example, the anode can include less than about 72 %, about 70%, about 68%, about 64 %, or about 60 %, or about 55% by weight zinc-based particles.

The zinc-based particles can be formed by various spun or air blown processes. The zinc-based particles can be spherical or non-spherical in shape. Non-spherical particles can be acicular in shape (i.e., having a length along a major axis at least two times a length along a minor axis) or flake-like in shape (i.e., having a thickness not more than 20% of the length of the maximum linear dimension). The surfaces of the zinc-based particles can be smooth or rough. As used herein, a "zinc-based particle" refers to a single or primary particle of a zinc-based material rather than an agglomeration or aggregation of more than one particle. A percentage of the zinc-based particles can be zinc fines. As used herein, zinc fines include zinc-based particles small enough to pass through a sieve of 200 mesh size (i.e., a sieve having a Tyler standard mesh size corresponding to a U.S. Standard sieve having square openings of 0.075 mm on a side) during a normal sieving operation (i.e., with the sieve shaken manually). Zinc fines capable of passing through a 200 mesh sieve can have a mean average particle size from about 1 to 75 microns, for example, about 75 microns. The percentage of zinc fines (i.e., -200 mesh) can make up about 10 percent, 25 percent, 50 percent, 75 percent, 80 percent, 90 percent, 95 percent, 99 percent or 100 percent by weight of the total zinc-based particles. A percentage of the zinc-based particles can be zinc dust small enough to pass through a 325 mesh size sieve (i.e., a sieve having a Tyler standard mesh size corresponding to a U.S. Standard sieve having square openings of 0.045 mm on a side) during a normal sieving operation. Zinc dust capable of passing through a 325 mesh sieve can have a mean average particle size from about 1 to 35 microns (for example, about 35 microns). The percentage of zinc dust can make up about 10 percent, 25 percent, 50 percent, 75 percent, 80 percent, 90 percent, 95 percent, 99 percent or 100 percent by weight of the total zinc-based particles. Even very small amounts of zinc fines, for example, at least about 5 weight percent, or at least about 1 weight percent of the total zinc-based particles, can have a beneficial effect on anode performance. The total zinc-based particles in the anode can consist of only zinc fines, of no zinc fines, or mixtures of zinc fines and dust (e.g., from about 35 to about 75 weight percent) along with larger size (e.g., -20 to +200 mesh) zinc-based particles. A mixture of zinc-based particles can provide good overall performance with respect to rate capability of the anode for a broad spectrum of discharge rate requirements as well as provide good storage characteristics. To improve performance at high discharge rates after storage, a substantial percentage of zinc fines and/or zinc dust can be included in the anode.

In some embodiments, anode 14 can include a gelling agent, for example, a high molecular weight polymer that can provide a network to suspend the zinc particles in the electrolyte. Examples of gelling agents include polyacrylic acids, grafted starch materials, salts of polyacrylic acids, polyacrylates, carboxymethylcellulose, a salt of a carboxymethylcellulose (e.g., sodium carboxymethylcellulose) and/or combinations thereof. Examples of such polyacrylic acids include Carbopol 940 and 934 commercially available from B. F. Goodrich Corp. and Polygel 4P available from 3V. An example of a grafted starch material is Waterlock A221 or A220 commercially available from Grain Processing Corp. (Muscatine, Iowa). An example of a salt of a polyacrylic acid is Alcosorb G1 available from Ciba Specialties. The anode can include, for example, between about 0.05% and 2% by weight or between about 0.1% and 1 % by weight of the gelling agent by weight.

Gassing inhibitors can include a metal such as bismuth, lead, tin, indium, aluminum or a mixture thereof added to the zinc anode in the form of an alloy. A gassing inhibitor also can include a soluble inorganic compound, such as a metal salt, for example, an indium or bismuth salt (e.g., indium sulfate, indium chloride, indium nitrate, bismuth nitrate). Alternatively, gassing inhibitors can be organic compounds, such as phosphate esters, ionic surfactants or nonionic surfactants. Examples of ionic surfactants are disclosed in, for example, U.S. Patent No. 4,777,100.

Separator 16 can have any of the conventional designs for primary alkaline battery separators. In some embodiments, separator 16 can be formed of two layers of a non-woven, non-membrane material with one layer being disposed along a surface of the other. To minimize the volume of separator 16 while providing an efficient battery, each layer of non-woven, non-membrane material can have a basic weight of about 54 grams per square meter, a thickness of about 5.4 mils when dry and a thickness of about 10 mils when wet. In these embodiments, the separator preferably does not include a layer of membrane material or a layer of adhesive between the non-woven, non-membrane layers. Typically, the layers can be substantially devoid of fillers, such as inorganic particles. In some embodiments, the separator can include inorganic particles. In other embodiments, separator 16 can include a layer of cellophane combined with a layer of non-woven material. The separator optionally can include an additional layer of non-woven material. The cellophane layer can be adjacent to cathode 12. Preferably, the non-woven material can contain from about 78% to 82% by weight polyvinylalcohol (PVA) and from about 18% to 22% by weight rayon and a trace amount of surfactant. Such non-woven materials are available from PDM under the tradename PA25. An example of a separator including a layer of cellophane laminated to one or more layers of a non-woven material is Duralam DT225 available from Duracell Inc. (Aarschot, Belgium).

In yet other embodiments, separator 16 can be an ion-selective separator. An ion-selective separator can include a microporous membrane with an ion-selective polymeric coating. In some cases, such as in rechargeable alkaline manganese dioxide cells, diffusion of soluble zincate ion, i.e., [Zn(OH)₄]²⁻, from the anode to the cathode can interfere with the reduction and oxidation of manganese dioxide, thereby resulting in a loss of coulombic efficiency and ultimately in decreased cycle life. Separators that can selectively inhibit the passage of zincate ions, while allowing free passage of hydroxide ions are described in U.S. Patent Nos. 5,798,180 and 5,910,366. An example of a separator includes a polymeric substrate having a wettable cellulose acetate-coated polypropylene microporous membrane (e.g., Celgard^{®} 3559, Celgard^{®} 5550, Celgard^{®} 2500, and the like) and an ion-selective coating applied to at least one surface of the substrate. Suitable ion-selective coatings include polyaromatic ethers (such as a sulfonated derivative of poly(2,6-dimethyl-1,4-phenyleneoxide)) having a finite number of recurring monomeric phenylene units each of which can be substituted with one or more lower alkyl or phenyl groups and a sulfonic acid or carboxylic acid group. In addition to preventing migration of zincate ions to the manganese dioxide cathode, the selective separator was described in U.S. Patent Nos. 5,798,180 and 5,910,366 as capable of diminishing diffusion of soluble ionic species away from the cathode during discharge.

Alternatively or in addition, the separator can prevent substantial diffusion of soluble transition metal species (e.g., Ag⁺, Ag²⁺, Cu⁺, Cu²⁺, Bi⁵⁺, and/or Bi³⁺) away from the cathode to the zinc anode, such as the separator described in U.S. Patent No. 5,952,124. The separator can include a substrate membrane such as cellophane, nylon (e.g., Pellon^{®} sold by Freundenburg, Inc.), microporous polypropylene (e.g., Celgard^{®} 3559 sold by Celgard, Inc.) or a composite material including a dispersion of a carboxylic ion-exchange material in a microporous acrylic copolymer (e.g., PD2193 sold by Pall-RAI, Inc.). The separator can further include a polymeric coating thereon including a sulfonated polyaromatic ether, as described in U.S. Patent Nos. 5,798,180; 5,910,366; and 5,952,124.

In other embodiments, separator 16 can include an adsorptive or trapping layer. Such a layer can include inorganic particles that can form an insoluble compound or an insoluble complex with soluble transition metal species to limit diffusion of the soluble transition metal species through the separator to the anode. The inorganic particles can include metal oxide nanoparticles, for example, as ZrO**₂** and TiO₂. Although such an adsorptive separator can attenuate the concentration of the soluble transition metal species, it may become saturated and lose effectiveness when high concentrations of soluble bismuth species are adsorbed. An example of such an adsorptive separator is disclosed in commonly assigned U.S.S.N. 10/682,740, filed on October 9, 2003.

Battery housing 18 can be any conventional housing commonly used for primary alkaline batteries. The battery housing 18 can be fabricated from metal, for example, nickel-plated cold-rolled steel. The housing typically includes an inner electrically-conductive metal wall and an outer electrically non-conductive material such as heat shrinkable plastic. An additional layer of conductive material can be disposed between the inner wall of the battery housing 18 and cathode 12. This layer may be disposed along the inner surface of the wall, along the circumference of cathode 12 or both. This conductive layer can be applied to the inner wall of the battery, for example, as a paint or dispersion including a carbonaceous material, a polymeric binder, and one or more solvents. The carbonaceous material can be carbon particles, for example, carbon black, partially graphitized carbon black or graphite particles. Such materials include LB1000 (Timcal, Ltd.), Eccocoat 257 (W. R. Grace & Co.), Electrodag 109 (Acheson Colloids, Co.), Electrodag 112 (Acheson), and EB0005 (Acheson). Methods of applying the conductive layer are disclosed in, for example, Canadian Patent No. 1,263,697.

The anode current collector 20 passes through seal 22 extending into anode 14. Current collector 20 is made from a suitable metal, such as brass or brass-plated steel. The upper end of current collector 20 electrically contacts the negative top cap 24. Seal 22 can be made, for example, of nylon.

Battery 10 can be assembled using conventional methods and hermetically sealed by a mechanical crimping process. In some embodiments, positive electrode 12 can be formed by a pack and drill method, described in U.S.S.N. 09/645,632, filed August 24, 2000.

Battery 10 can be a primary electrochemical cell or in some embodiments, a secondary electrochemical cell. Primary batteries are meant to be discharged (e.g., to exhaustion) only once, and then discarded. In other words, primary batteries are not intended to be recharged. Primary batteries are described, for example, by D. Linden and T. B. Reddy (Handbook of Batteries, 3rd ed., New York: McGraw-Hill Co., Inc., 2002). In contrast, secondary batteries can be recharged for many times (e.g., more than fifty times, more than a hundred times, more than a thousand times). In some cases, secondary batteries can include relatively robust separators, such as those having many layers and/or that are relatively thick. Secondary batteries can also be designed to accommodate changes, such as swelling, that can occur in the batteries. Secondary batteries are described, for example, by T. R. Crompton (Battery Reference Book, 3rd ed., Oxford: Reed Educational and Professional Publishing, Ltd., 2000) and D. Linden and T. B. Reddy (Handbook of Batteries, 3rd ed., New York: McGraw-Hill Co., Inc., 2002).

Battery 10 can have of any of a number of different nominal discharge voltages (e.g., 1.2 V, 1.5 V, 1.65 V), and/or can be, for example, a AA, AAA, AAAA, C, or D battery. While battery 10 can be cylindrical, in some embodiments, a battery can be non-cylindrical. For example, a battery 10 can be a coin cell, a button cell, a wafer cell, or a racetrack-shaped cell. In some embodiments, a battery 10 can be prismatic. In certain embodiments, a battery can have a rigid laminar cell configuration or a flexible pouch, envelope or bag cell configuration. In some embodiments, a battery can have a spirally wound configuration, or a flat plate configuration. Batteries are described, for example, in U.S. Patent No. 6,783,893; U.S. Patent Application Publication No. 2007/0248879 A1, filed on June 20, 2007; and U.S. Patent No. 7,435,395.

### Examples

The following examples are illustrative and not intended to be limiting.

### COMPARATIVE EXAMPLE 1 - Batteries including commercial EMD

A commercial EMD powder was obtained from Tronox, Inc. (Oklahoma City, OK) under the tradename TRONOX AB3. Values for characteristic physical properties of the commercial EMD are summarized in **Table 1.** The commercial EMD was blended with natural graphite, for example, MP-0507 (i.e., NdG15) available from Nacionale de Grafite (Itapecerica, MG Brazil) and 38% KOH electrolyte solution containing 2 wt% zinc oxide in a weight ratio of 75:20:5. Button cells were prepared from the wet cathode mixture by the general manner described in **Example 1** (*vide infra).* Typically, cells were tested within 24 hours after fabrication and OCV measured immediately before discharge. Cells including the EMD of **Comparative Example 1** were discharged to a cutoff voltage of 0.8 V at a constant low discharge rate of about 10 mA/g active corresponding to a nominal C/30 discharge rate. Average gravimetric discharge capacity and average OCV of the cells of **Comparative Example 1** with cathodes including EMD are given in **Table 2.** The low rate discharge capacity typically ranges between about 282 and 287 mAh/g and is about 92-93% of the theoretical specific capacity of 307 mAh/g.

### COMPARATIVE EXAMPLE 2 - Batteries including acid-treated commercial EMD

About 100 g commercial EMD powder (e.g., Tronox, AB) was added with stirring to about 1 L of aqueous 6 M H₂SO₄ solution that had been pre-cooled to about 2 to 5°C. The mixture was maintained at about 2°C and stirred for about 4-6 hours. After treatment was complete, the suspended solids were allowed to settle, and the clear supernatant liquid decanted. The solid acid-treated EMD was collected by vacuum filtration and washed with aliquots of deionized water until pH of the filtrate was nearly neutral (i.e., pH ~5-6), and the solid acid-treated EMD was then dried at 20°C for about 24 hours in air. Values for characteristic physical properties of acid-treated EMD powder are summarized in **Table 1.**

A sample of dried, acid-treated EMD was blended manually using a mortar and pestle with a natural graphite (e.g., Nacionale de Grafite, MP-0702x) and 38% KOH electrolyte solution in a weight ratio of 75:20:5. Button cells were fabricated from the wet cathode mix in the general manner described in **Example 1** *(vide infra*). Cells were tested within 24 hours after fabrication and OCV measured immediately before discharge. The cells of **Comparative Example 2** were discharged to a 0.8 V cutoff voltage at a constant low discharge rate of about 10 mA/g active corresponding to a nominal C/30 discharge rate. The average discharge capacity and average OCV values of the cells of **Comparative Example 2** are given in **Table 2.** The low rate discharge capacity typically ranges between about 286 and 296 mAh/g and is about 93-96% of the theoretical specific capacity of 307 mAh/g.

### COMPARATIVE EXAMPLE 3 - Batteries including CoOOH-coated β-NiOOH

A commercial β-NiOOH powder was obtained, for example, from Kansai Catalyst Co., Ltd. (Osaka, Japan). The β-NiOOH particles have a surface coating of cobalt oxyhydroxide (CoOOH) in the amount of about 4 percent by weight of the pure NiOOH. Values for characteristic physical properties of the CoOOH-coated β-NiOOH powder are summarized in **Table 1.** The CoOOH-coated β-NiOOH was blended manually using a mortar and pestle with synthetic oxidation-resistant graphite, for example, Timrex^{®} SFG-15 from Timcal-America Co. (Westlake, OH) and 38% KOH electrolyte solution in a weight ratio of 75:20:5. Button cells were prepared from the wet cathode mix in the general manner described in **Example 1** (*vide infra*). Cells were tested within 24 hours after fabrication and OCV values measured immediately before discharge. The cells of **Comparative Example 3** were discharged to a 0.8 V cutoff voltage at a constant low discharge rate of about 10 mA/g active corresponding to a nominal C/25 discharge rate. The average discharge capacity and average OCV values of the cells of **Comparative Example 3** are given in **Table 3.** The low rate discharge capacity of about 224 mAh/g is about 80% of the adjusted theoretical specific capacity of 280 mAh/g for the 4 wt% CoOOH-coated β-NiOOH.

### COMPARATIVE EXAMPLE 4 - Batteries including Ag₂O

Monovalent silver oxide, Ag₂O, powder was obtained, for example, from Aldrich Chemical Company (e.g., ReagentPlus grade). Values for characteristic physical properties of the CoOOH-coated β-NiOOH powder are summarized in **Table 1.** The Ag₂O was blended manually using a mortar and pestle with synthetic oxidation-resistant graphite (e.g., Timcal-America, Timrex SFG-15) and 38% KOH electrolyte solution in a weight ratio of 75:20:5 to form a wet cathode mix. Button cells were prepared from the wet cathode mix in the general manner described in **Example 1** *(vide infra*)*.* Cells were tested within 24 hours after fabrication and OCV measured immediately before discharge. The cells of Comparative Example 4 were discharged at a constant low discharge rate of 10 mA/g active corresponding to a nominal C/22 discharge rate. The average discharge capacity and average OCV values of the cells of **Comparative Example 4** are given in **Table 4.** The low rate discharge capacity of about 223 mAh/g corresponding to about 96% of the theoretical gravimetric capacity of 232 mAh/g.

### INFORMATIVE EXAMPLE 1 - Batteries including λ-MnO₂ prepared from a lithium manganese oxide spinel, prepared from hydrothermally synthesized CMD precursor

The λ-MnO₂ was synthesized by delithiation of a nominally stoichiometric lithium manganese oxide spinel by a low temperature acid extraction process. The spinel was prepared from a CMD precursor synthesized by the chemical oxidation of Mn²⁺ ions in an aqueous solution at an elevated temperature in a sealed pressure vessel via a hydrothermal treatment. The hydrothermal treatment of CMD was similar to that described, for example, by F. Cheng et al. (Inorganic Chemistry, 2005, 45(5), 2038-2044) for the preparation of nanostructured γ-MnO₂ CMD particles.

### Preparation of CMD precursor to spinel

An aqueous 0.2 M Mn²⁺ solution was prepared by dissolving 40 g (0.24 mole) of hydrated manganous sulfate (MnSO₄·H₂O) in 1.2 L of de-ionized water at ambient room temperature. The Mn²⁺ solution was transferred to a 2 liter capacity hydrothermal pressure vessel fabricated from Hastelloy C-276 alloy (e.g., Model 4520, Parr Instrument Co., Moline, IL) with a Teflon liner. To the Mn²⁺ solution, 54.0 g (0.24 mole) of solid ammonium peroxydisulfate ((NH₄)₂S₂O₈) was added. The pressure vessel was hermetically sealed and purged with an inert gas (e.g., argon, nitrogen) for about 5-10 minutes. The mixture was heated with stirring (300 rpm) from ambient room temperature to 80°C in about 0.5 hour and held at 80 °C for 3 hours. Heating was stopped and the pressure vessel and contents allowed to cool to ambient room temperature before removal of the product. A solid product was isolated by pressure or vacuum filtration of the mixture and washed with multiple portions of de-ionized water until the pH of the filtrate was nearly neutral (i.e., pH -6-7). The black solid product was dried at about 60°C in air for about 12-16 hours.

The X-ray powder diffraction pattern of the dried solid was comparable to standard pattern for crystalline γ-MnO₂ (or ramsdellite) (i.e.. Powder Diffraction File No. 14-0644; International Centre for Diffraction Data, Newtown Square, PA). The dried γ-MnO₂ CMD powder had a tap density ranging from about 0.4 to 1.0 g/cm³. The γ-MnO₂ CMD particles were composed of filamentous or needle-like crystallites having nanometer scale dimensions densely packed into agglomerates forming sea-urchin-like particles similar to the nanostructured γ-MnO₂ particles described by F. Cheng et al. (Inorganic Chemistry, 2005, 45(5), 2038-2044). The average particle size of agglomerates of the γ-MnO₂ CMD particles ranged from about 2-10 µm as determined from SEM images.

### Preparation of spinel precursor to λ-MnO₂

A nominally stoichiometric lithium manganese oxide spinel was prepared by lithiation of the γ-MnO₂ CMD via treatment of the CMD powder with a stoichiometric amount of monohydrated lithium hydroxide (LiOH·H₂O) dissolved in a salt melt consisting of a eutectic mixture of KCl and NaCl (e.g., in a weight ratio of 56:44) at a temperature of about 700-800 °C in air. For example, 20.00 g of the dried CMD powder and 4.82 g of LiOH·H₂O (i.e., in a 2:1 Li:Mn atom ratio) were blended together with 49.85 g of a mixture of KCl and NaCl salts in a 56:44 weight ratio. The resulting mixture was heated in air to form a melt (i.e., salt flux) and held at about 800 °C for about 12 hours. Heating was stopped and the mixture allowed to cool slowly to ambient room temperature. The resulting solid mass was broken up, washed with multiple portions of de-ionized water to dissolve the salts, and dried at about 60 °C in air. The dried solid was heated for about 6 hours at 700-800 °C in air and allowed to cool slowly to ambient room temperature.

The X-ray powder diffraction pattern of the dried solid corresponded closely to that reported for stoichiometric lithium manganese oxide spinel (i.e., Powder Diffraction File No. 35-0782; International Centre for Diffraction Data, Newtown Square, PA). The value of the refined cubic unit cell constant, a₀ = 8. 2435 Å, calculated from the powder diffraction data by Reitveld structural refinement analysis was consistent with the values reported by Y. Gao and J. R. Dahn (Journal of the Electrochemical Society, 1996, 143(1), 100-114) for spinels having a nominal formula of Li₁₊ₓMn₂₋ₓO₄, for 0.00≤ x≤ 0.04 and cell constants ranging from 8.2429 to 8.2486 Å. The X-ray crystallite size calculated by the Scherrer method was about 67 nm. The total lithium content of the spinel was determined by AA spectroscopy to be 4.01 wt% and the manganese content by ICP-AE spectroscopy to be 60.24 wt%, corresponding to a Li/Mn atom ratio of 0.527 to give a calculated formula of Li_{1.03}Mn_{1.97}O₄. The B.E.T. specific surface area of the spinel powder was about 4 m²/g and the average primary particle size was about 1-2 µm (i.e., from SEM images).

### Acid treatment of spinel to form λ-MnO₂

λ-MnO₂ was synthesized by delithiation of the spinel using a low temperature acid extraction process. Approximately 100g of dry spinel powder was added with stirring to about 1.5 liters of 6 M sulfuric acid solution pre-cooled to about 2 °C to form a slurry. The slurry was stirred for a period ranging from 12 to 20 hours and maintained at between 2 °C and 5 °C. The stirring was stopped, the solids allowed to settle, and the supernatant solution removed by decantation and discarded. A 1.5 to 2 liter portion of deionized water was added to the solid deposit and the mixture stirred for at least 1 to 5 minutes at ambient room temperature. The solids were allowed to settle, the supernatant removed by decantation, and the pH of the supernatant measured. If the pH of the supernatant was less than about 6 to 7, the water washing process was repeated. Once the pH of the supernatant was in the range of 6 to 7, a solid product was isolated by filtration (i.e., suction filtration, pressure filtration), centrifugation or spray drying. The solid product was dried at 60 °C in air for about 12 to 24 hours. The weight of the dried solid product typically ranged from about 70 to 75 g, corresponding to a weight loss of about 25 to 30% relative to the weight of starting spinel.

The X-ray powder diffraction pattern of the dried product was consistent with the standard pattern reported for λ-MnO₂ (i.e., Powder Diffraction File No. 44-0992; International Centre for Diffraction Data, Newtown Square, PA). The value of the refined cubic unit cell constant a₀ = 8.0324 Å was consistent with typical values reported for λ-MnO₂ ranging from 8.0222 Å to 8.0640 Å. The X-ray crystallite size calculated by the Scherrer method was about 51 nm. The λ-MnO₂ had a B.E.T. specific surface area of about 6.6 m²/g, a true density (i.e., He pycnometer density) of about 4.15 g/cm³, and a tap density of about 1.0-1.5 g/cm³. The average primary particle size ranged from about 0.75-1 µm (i.e., from SEM images). Residual lithium content of the λ-MnO₂ was determined by AA spectroscopy to be 0.11 wt%, and the manganese content determined by ICP-AE spectroscopy to be 60.2 wt%, corresponding to a calculated formula of Li_{0.015}MnO₂. Values for characteristic physical properties of the λ-MnO₂ are summarized in **Table 1.**

### Batteries including λ-MnO₂

Discharge performance of the λ-MnO₂ was evaluated in alkaline button cells (e.g., 635-type). The cells were assembled in the following manner. A 10 g portion of the dried λ-MnO₂ powder was blended together with an oxidation-resistant synthetic graphite, for example, Timrex^{®} SFG15 available from Timcal, Ltd. (Bodio, Switzerland) and a KOH electrolyte solution containing 38 wt% KOH and 2 wt% zinc oxide in a weight ratio of 75:20:5 to form a wet cathode mix. About 0.3-0.4 g of the wet cathode mix was pressed into a nickel grid welded to the bottom of the cathode can. A polymeric insulating seal was inserted into the cathode can. A disk of multilayer separator including a layer of cellophane bonded to a non-woven polymeric layer, for example, Duralam^{®} DT225 from Duracell, Inc. (Aarshot, Belgium) was saturated with electrolyte solution and positioned on top the cathode with the cellophane layer facing the cathode. Additional electrolyte solution was added to the separator to ensure that the underlying cathode also was saturated. About 2.6 g of anode slurry containing zinc-based particles, electrolyte solution, a gelling agent, and a gassing inhibitor was applied to the upper surface of the separator. The anode can was positioned on top the cell assembly and was mechanically crimped to the cathode can with the interposed seal to hermetically close the cell.

Typically, cells were tested within 24 hours after fabrication and OCV measured immediately before discharge. Cells were discharged to a cutoff voltage of 0.8 V at a constant low discharge rate of about 10 mA/g active corresponding to a nominal C/40 discharge rate. As used herein, a C/40 discharge rate corresponds to the constant discharge rate at which the total cell capacity is discharged in 40 hours. Referring to **FIG. 3****,** a discharge curve for a typical cell including the λ-MnO₂ of **Example 1** discharged at 10 mA/g active to a 0.8 V cutoff voltage is shown. After an initial voltage dip of about 150 mV, the discharge voltage profile for a typical cell including the λ-MnO₂ of **Example 1** was nearly superimposable (i.e., tracked within about 20-40 mV) with that for a typical cell of **Comparative Example 1** including a commercial EMD (e.g., Tronox AB) down to a CCV of about 1 V with additional capacity on a flat plateau having a voltage ranging from about 1 to 0.95 V. Cells including the λ-MnO₂ of **Example 1** had an average gravimetric capacity of about 342 mAh/g, when discharged at 10 mA/g active to a 0.8 V cutoff voltage, corresponding to nearly 120% of the average gravimetric capacity of the cells of **Comparative Example 1** including EMD discharged at the same rate. The low-rate discharge capacity of 342 mAh/g is about 83% of the theoretical specific capacity of 410 mAh/g for λ-MnO₂.

**Table 1. Physical properties of λ-MnO₂ and second cathode active materials**

| **Properties** | **Cathode active materials** | | | | | | | |
|---|---|---|---|---|---|---|---|---|
| | λ-MnO₂ hydro | λ-MnO₂ pCMD | λ-MnO₂ P300 | EMD | Acid-EMD | Co-ctd β-NiOOH | Li_{1- x}H_{y}NiO₂ | Ag₂O |
| Example No. | 1 | 2 | 3 | C1 | C2 | C3 | C4 | C5 |
| Ave particle size (µm) | 0.75-1.0 | 0.25-1.0 | 2.9 | 40 | 40 | 21 | 3.2 | 2-5 |
| X-ray cryst. size (nm) | 51 | 50 | 74 | --- | --- | --- | --- | 58 |
| True density (g/cm³) | 4.18 | 4.30 | 4.21 | 4.42 | 4.31 | 4.10 | 4.70 | 7.15 |
| Tap density (g/cm³) | 1.0-1.5 | 1.3-1.6 | 1.1 | 2.5 | 2.4 | 2.4 | --- | 1.8 |
| B.E.T. SSA (m²/g) | 6.6 | 10.0 | 24.1 | 33.0 | 37.0 | 18.4 | 1.8 | --- |
| Ave pore size (A) | --- | 28 | 36 | 29 | 24 | --- | 21 | --- |
| Cum. pore vol.(cc/g) | --- | 0.058 | 0.095 | 0.085 | 0.037 | --- | 0.026 | --- |

### INFORMATIVE EXAMPLE 2 - Batteries including λ-MnO₂ synthesized from pCMD precursors

The λ-MnO₂ was synthesized from a nominally stoichiometric lithium manganese oxide spinel prepared from a pCMD precursor synthesized by the general method disclosed in Example 5 of U.S. Patent No. 5,277,890 using the low temperature acid treatment of **Example 1** (*vide infra).*

### Preparation of pCMD precursor to spinel

An aqueous 0.4 M Mn²⁺ solution was prepared by dissolving 120 g (0.71 mole) of hydrated manganous sulfate (MnSO₄·H₂O) in 1.8 L of de-ionized water at ambient room temperature. To the rapidly stirred Mn²⁺ solution, 161.7 g (0.71 mole) of solid ammonium peroxydisulfate ((NH₄)₂S₂O₈) was added. The stirred solution was heated from 20°C to 50°C in about 2 hours (i.e., about 15 °C/h) and held at 50 °C. The solution slowly changed in color from clear, light pink to opaque brown and finally, a black suspension of pCMD formed. After 18 hours at 50 °C, the slurry was heated from 50 °C to 75 °C during a period of about 1 hour (i.e., about 25 °C/h) and held at 75 °C for 3 hours. The slurry was then heated to 100 °C during a period of about 2 hours (i.e., about 12 °C/h), held for 2 hours at 100 °C, and rapidly cooled to ambient room temperature in about 1 hour (i.e., about 60°C/h). The suspended solids were allowed to settle and the supernatant liquid removed by decantation. The solids were recovered by pressure or vacuum filtration and washed with multiple portions of de-ionized water until the filtrate was nearly neutral (i.e., pH about 6-7). The black solid was dried in air at about 60°C.

The X-ray powder diffraction pattern of the dried solid was consistent with the standard pattern for α-MnO₂ (i.e., Powder Diffraction File No. 44-0141; International Centre for Diffraction Data, Newtown Square, PA) with several minor peaks that can be attributed to the presence of γ-MnO₂ as a minor impurity. The values for the refined tetragonal unit cell constants were a₀ = 9.8744 Å and c₀ = 2.8538 Å. The X-ray crystallite size calculated by the Scherrer method was about 22 nm. The dried pCMD powder had a tap density ranging from about 1.1 to 1.3 g/cm³. The pCMD particles were composed of filamentous or needle-like crystallites (e.g., rods, laths) densely packed into agglomerates with a morphology similar to that of the pCMD particles depicted in the SEM images in Figures 1 and 2 of U.S. Patent No. 5,277,890. The average particle size range for the pCMD agglomerates is about 7-10 µm (i.e., from SEM images).

### Preparation of spinel precursor to λ-MnO₂

A nominally stoichiometric lithium manganese oxide spinel was prepared by lithiation of the pCMD in a eutectic KCl:NaCl salt melt (56:44 weight ratio) by the method of **Example 1** herein above. The X-ray powder diffraction pattern of the dried solid corresponded closely to the standard pattern for a stoichiometric lithium manganese oxide spinel (i.e., Powder Diffraction File No. 35-0782; International Centre for Diffraction Data, Newtown Square, PA). The value of the refined cubic unit cell constant was a₀ = 8. 2441 Å and the X-ray crystallite size calculated by the Scherrer method was about 85 nm. The lithium content of the spinel was determined by AA spectroscopy to be 4.03 wt% and the manganese content determined by ICP-AE spectroscopy to be 63.7 wt%, corresponding to a Li/Mn atom ratio of 0.435 and a calculated stoichiometry of about Li_{0.90}Mn_{2.10}O₄. The B.E.T. specific surface area of the spinel powder was about 2.1 m²/g. The average particle size of the spinel powder was about 10-15 µm and consisted of relatively large agglomerates of smaller isotropic (i.e., block-like) spinel primary particles. The average particle size of the spinel primary particles was about 1-2 µm (i.e., from SEM images).

### Acid treatment of spinel to form λ-MnO₂

λ-MnO₂ was prepared by delithiation of the spinel of **Example 2** via the acid extraction process of **Example 1.** The X-ray powder diffraction pattern of the dried solid product corresponded closely to the standard pattern for λ-MnO₂ (i.e., Powder Diffraction File No. 44-0992; International Centre for Diffraction Data, Newtown Square, PA). The value of the refined cubic unit cell constant, a₀ = 8.0300 Å, was nearly identical to that of the λ-MnO₂ of **Example 1.** The X-ray crystallite size calculated by the Scherrer method was about 50 nm, nearly identical to that of the λ-MnO₂ of **Example 1.** The B.E.T. specific surface area of the λ-MnO₂ of **Example 2** was about 10.0 m²/g, the true density about 4.26 g/cm³, and the tap density about 1.3-1.6 g/cm³. The average particle size of the λ-MnO₂ powder was about 10-15 µm and consisted of relatively large agglomerates of small, irregular-shaped λ-MnO₂ primary particles. The average particle size of the λ-MnO₂ primary particles was about 0.25-1.0 µm (i.e., from SEM images). The residual lithium content of the λ-MnO₂ of **Example 2** was determined by AA spectroscopy to be 0.107 wt% and the manganese content by ICP-AE spectroscopy to be 63.3 wt%, corresponding to a calculated formula of about Li_{0.013}MnO₂. Values for characteristic physical properties of the λ-MnO₂ are summarized in **Table 1.**

### Batteries including λ-MnO₂

Button cells with cathodes including the λ-MnO₂ of **Example 2** were prepared in the same manner as the cells the λ-MnO₂ of **Example 1** described herein above. Typically, cells were tested within 24 hours after fabrication and OCV values were measured immediately before discharge. Referring to **FIG**. 3, a discharge curve for a typical cell including the λ-MnO₂ of **Example 2** discharged at 10 mA/g active to a 0.8 V cutoff voltage is shown. The discharge voltage profile for a typical cell of **Example 2,** after an initial voltage dip of about 200 mV, tracked about 20-40 mV lower than typical cells of **Comparative Example 1 to** a CCV of about 1 V. Cells including the λ-MnO₂ of **Example 2** had an average gravimetric capacity of about 331 mAh/g, when discharged at 10 mA/g active to a 0.8 V cutoff voltage, corresponding to about 117% of the average gravimetric capacity of typical cells of **Comparative Example 1** including EMD discharged at the same rate.

Without wishing to he bound by theory, it is believed that the additional capacity of the cells including the λ-MnO₂ of **Examples 1** and 2 can be attributed to the use combination of a CMD or a pCMD-type precursor to prepare a nominally stoichiometric precursor spinel having a relatively high specific surface area as well as the use of a relative low temperature acid extraction process to prepare the corresponding λ-MnO₂ cathode active material.

### INFORMATIVE EXAMPLE 3 - Batteries including λ-MnO₂ synthesized from commercial lithium manganese oxide spinel

A high purity λ-MnO₂ was prepared from a nominally stoichiometric lithium manganese oxide spinel powder obtained from a suitable commercial source by low temperature acid extraction to remove essentially all the lithium from the spinel lattice. For example, a slightly lithium-deficient spinel having a nominal formula of Li_{0.98}Mn_{2.02}O₄ was obtained from Erachem-Comilog, Inc. (Baltimore, MD) under the tradename P300.

### Acid treatment of spinel to form λ-MnO₂

λ-MnO₂ was prepared by delithiation of dry spinel powder via the acid extraction process described in **Example 1** herein above. The X-ray powder diffraction pattern of the dried solid product was nearly identical to the standard diffraction pattern reported for λ-MnO₂ (i.e., Powder Diffraction File No. 44-0992; International Centre for Diffraction Data, Newtown Square, PA). The X-ray crystallite size calculated by the Scherrer method was about 72 nm and was larger than that of the λ-MnO₂ of both **Examples 1** and **2.** A value of 15.8 m²/g for the multipoint N₂-adsorption B.E.T. specific surface area for the λ-MnO₂ powder was substantially larger than the value of 5.8 m²/g for the precursor spinel powder. The average (mean) particle size of the λ-MnO₂ powder was about 3.0 microns compared to about 4.1 microns for the precursor spinel powder. The λ-MnO₂ powder had a true density (i.e., He pycnometer density) of about 4.26 g/cm³ and a tap density of about 1.10 g/cm³. Corresponding values for the precursor spinel were about 4.18 g/cm³ and about 0.95-1.00 g/cm³. The residual lithium content of the λ-MnO₂ was determined by AA spectroscopy to be 0.339 wt% and the manganese content determined by ICP-AE spectroscopy to be 64.8 wt%, corresponding to a calculated chemical formula of about Li_{0.041}MnO₂.

In order to remove any residual lithium remaining in the λ-MnO₂ crystal lattice after acid extraction, the dried λ-MnO₂ powder was lightly ground, for example, manually with a mortar and pestle, the ground powder added with stirring to about 1.5 liters of 6 M sulfuric acid solution pre-cooled to about 2 °C, and the acid extraction process repeated. The weight of the dried solid product was only slightly less than the starting weight of λ-MnO₂. The residual lithium content of the twice acid-extracted λ-MnO₂ decreased to 0.197 wt% and the manganese content was 61.4 wt%, corresponding to a calculated chemical formula of Li_{0.025}MnO₂. The X-ray powder diffraction pattern of the twice acid-extracted λ-MnO₂ was nearly identical to that of the λ-MnO₂ prepared by the initial acid extraction. However, the value of the refined cubic unit cell constant decreased slightly to a₀ = 8.04372 Å. The B.E.T. specific surface area of the twice acid-extracted λ-MnO₂ powder increased by nearly 50% to about 24.1 m²/g, whereas the average particle size only decreased slightly to about 2.9 microns. The λ-MnO₂ powder had a true density of about 4.21 g/cm³ and a tap density of about 1.10 g/cm³. Values for characteristic physical properties of the λ-MnO₂ are summarized in **Table 1.**

### Batteries including λ-MnO₂

The discharge performance of single acid-extracted and twice acid-extracted λ-MnO₂ powders of **Example 3** were evaluated in button cells prepared in the same manner as described in **Example 1** herein above. Referring to FIG. 3, the discharge voltage profile for a typical cell including the twice acid-extracted λ-MnO₂ of **Example 3,** after an initial voltage dip of about 200 mV, tracked about 15-20 mV lower than typical cells of **Comparative Example 1** including EMD down to a CCV of about 1 V. The average low-rate discharge voltage (i.e., 1.22 V) of the cells of **Example 3** was identical to that for the cells of **Examples 1** and **2.** Cells including the twice acid-extracted λ-MnO₂ of **Example 3** provided up to about 120% of the average gravimetric capacity of typical cells of **Comparative Example 1** when discharged at a relative low rate (e.g., 10 mA/g active) to a 0.8 V cutoff voltage. The cells of **Example 3** including the twice acid-extracted λ-MnO₂ provided 7-10% more capacity than comparable cells including λ-MnO₂ prepared by a single acid extraction when discharged under identical conditions.

Cells including either the twice acid-extracted λ-MnO₂ of **Example 3** or the EMD of **Comparative Example 1** also were discharged at a relative high rate (i.e., 100 mA/g active ~ C/3) to a 0.8 V cutoff voltage. The average discharge voltages for cells including the twice acid-extracted λ-MnO₂ of **Example 3** and the EMD of **Comparative Example 1** were about 1.1 V and 1.05 V, respectively. The high rate discharge capacities of both cells decreased by about 40-50% compared to the low rate capacities. Cells including the twice acid-extracted λ-MnO₂ of **Example 3** provided about 10-15% greater capacity than cells including the EMD of **Comparative Example 1.** In addition, the high rate voltage profile for the cells including λ-MnO₂ differed from that for cells including EMD, in that after a steep initial voltage drop from OCV to about 1.1 V, there was a relatively flat plateau at about 1.07 V extending to about 50% DOD followed by a gradual decrease to the 0.8 V cutoff voltage.

### INFORMATIVE

### EXAMPLE 4- Batteries including partially delithiated lithium nickel dioxide.

A stoichiometrie lithium nickel oxide with a formula of LiNiO₂ was synthesized by blending 93.91 g of a commercial spherical beta-nickel oxyhydroxide β-NiOOH) powder (e.g., Kansai Catalyst Co.,) and 42.97 g of a hydrated lithium hydroxide (LiOH·H₂O) (e.g., Aldrich Chemical) and heating the mixture at about 180°C for about 20 hours in an oxygen gas flow. After heating, the mixture was allowed to cool in the furnace to ambient room temperature. The mixture was ground manually with a mortar and pestle and re-heated at 800°C: for about 48 hours in an oxygen gas flow to generate the final product. The X-ray powder diffraction pattern of the product corresponded closely to that reported for a stoichiometric lithium nickel oxide, LiNiO₂ (i.e.. Powder Diffraction File No. 09-0063; International Centre for Diffraction Data, Newtown Square, PA) having a layered structure.

The lithium nickel oxide, LiNiO₂ was partially delithiated by the same acid- extraction process used to prepare λ-MnO₂ from a spinel precursor described in **Example 1.** For example, approximately 100 g of LiNiO₂ was added to 1.5 L of a rapidly stirred aqueous 6 M H₂SO₄ solution cooled to between 0° and 5 °C (e.g., about 2 °C). The resulting slurry was stirred and maintained at about 2 °C for about 20 hours. Next, the suspended solids were allowed to settle, the supernatant liquid removed by decantation, and the solid washed with multiple portions of de-ionized water until pH of the supernatant was nearly neutral (i.e., pH ~6-7). A solid product was collected by either pressure or vacuum filtration and dried at about 80°C in air for about 24 hours. The X-ray powder diffraction pattern of the dried product was similar to that of the stoichiometric LiNiO₂ but the positions of the diffraction peaks were shifted to higher 2θ diffraction angles. The dried product can have a general formula of Li₁₋ₓH_{y}NiO₂, wherein x corresponds to the mole fraction of lithium removed from the LiNiO₂ crystal lattice and y corresponds to the mole fraction of protons inserted into the LiNiO₂ crystal lattice during acid-treatment. The values of x and y can be independent of each other and correspond to 0.1≤ x ≤ 0.9 and 0.1≤y≤0.9. The residual) lithium content of the dried Li₁₋ₓH_{y}NiO₂ was determined by ICP-AE spectroscopy to be about 0.87 wt% Li, corresponding to a value of x = 0.89. The hydrogen (i.e., proton) content was determined by prompt gamma-ray neutron activation analysis (PPGA) as about 0.20 wt% H. The nominal composition corresponded to a calculated formula of Li_{0.11}H_{0.2}NiO₂. The mean average particle size of the Li₁₋ₓH_{y}NiO₂ powder ranged from about I to 8 µm, the B.E.T. specific surface area was about 1.8 m²/g, and the true density was about 4.70 g/cm³.

The Li₁₋ₓH_{y}NiO₂ powder was blended manually using a mortar and pestle with a synthetic oxidation-resistant graphite (e.g., Timcal-America, Timrex SFG-15) and 38% KOH electrolyte solution in a weight ratio of 75:20:5 to form a wet cathode mix. Button cells were fabricated from the wet cathode mix in the general manner described in **Example 1.** The cells of **Example** 4 were discharged at a low relative rate (e.g., 10 mA/g active) to a 0.8V cutoff voltage. Referring to **FIG. 5****,** the discharge curve for typical cells of **Example** 4 including Li₁₋ₓH_{y}NiO₂ as the only active cathode material discharged at a low rate (e.g., 10 mA/g active) has two distinct flat voltage plateaus after an initial voltage dip of about 250 mV from an OCV value of about 1.85 V. The upper discharge plateau is located at about 1.55 V and has a gravimetric specific capacity of nearly 200 mAh/g. The lower discharge plateau is located at about 1.32 V and also has a specific capacity of about 200 mAh/g. The total low-rate discharge capacity was about 400 mAh/g and corresponds to about 68% of the theoretical two-electron gravimetric specific capacity (i.e., 591 mAh/g) of completely delithiated Li₁₋ₓH_{y}NiO₂, wherein x = 1 and y=0.

### INFORMATIVE

### EXAMPLE 5 - Batteries including blends of λ-MnO₂ and acid-treated EMD

Blends of λ-MnO₂ and acid-treated EMD in various weight ratios were prepared by mechanical dry mixing or milling. For example, a 1:1 blend by weight of λ-MnO₂ and acid-treated EMD was prepared by dry blending 0.75 g of the acid-treated EMD of **Comparative Example 2** and 0.75 g of the λ-MnO₂ of **Example 1, 2** or **3** in a laboratory blade mill. A wet cathode mix was prepared by further blending the λ-MnO₂ and acid-treated EMD with a natural graphite, for example, NdG-15 (Nacionale de Grafite, Brazil) or an oxidation resistant graphite, for example, Timrex^{®} SFG-15 (Timcal America Co., Westlake, OH) and an electrolyte solution containing 38 wt% KOH and 2 wt% zinc oxide in a weight ratio of blend: graphite: electrolyte of 75:20:5. Button cells were prepared from the wet cathode mix in the general manner described in **Example 1** herein above. The cells of **Example 5a** with cathodes including a 1:1 blend of λ-MnO₂ and acid-treated EMD discharged at a relative low discharge rate (e.g., 10 mA/g active) to a 0.8 V cutoff voltage provided an average gravimetric specific capacity of about 321 mAh/g. This value corresponds to about 108% of the specific capacity of the cells of **Comparative Example 2** containing acid-treated EMD as the only cathode active material.

Similarly, other blends of the λ-MnO₂ of **Example 1** and the acid-treated EMD of **Comparative Example 2** were prepared in weight ratios of 1:9, 1:4, and 3:7. Button cells were fabricated in the same general manner as described in **Example 1,** but including blends of λ-MnO₂ and acid-treated EMD in weight ratios of 1:9, 1:4, and 3:7 as **Examples 5b-d,** respectively. Referring to **FIG. 4****,** discharge curves for typical cells including the blends of λ-MnO₂ and acid-treated EMD of **Examples 5a-d** discharged at a relative low rate (e.g., 10 mA/g active) to a 0.8 V cutoff voltage are compared to those of cells of **Example 1** and **Comparative Examples 1** and **2.** The average specific discharge capacities and OCV values are given in **Table 2.**

In general, primary alkaline batteries with cathodes including blends of λ-MnO₂ and acid-treated EMD have greater fresh discharge capacities at relative low discharge rates than cells including acid-treated EMD as the only cathode active material and also have greater average CCV than cells including λ-MnO₂ as the only cathode active material. For example, the cells of **Example 5a** with cathodes including a 1:1 (by weight) blend of λ-MnO₂ and acid-treated EMD, discharged at a relative low rate to a 0.8 V cutoff voltage had a gravimetric specific capacity of about 321 mAh/g. Further, this capacity value is unexpectedly greater than that calculated from the sum of the proportional average capacities of the cells of **Example 1** and **Comparative Example 2.** For example, the average capacity of the cell of **Example 5a** is about 104% of that calculated from the sum of 50% of the average capacity of the cells of **Comparative Example 2** including acid-treated EMD as the only cathode active material and 50% of the average capacity of the cells of **Example 1** including λ-MnO₂ as the only cathode active material all discharged at 10 mA/g active to a 0.8 V cutoff voltage. The average OCV values of the cells of **Example 5a-d** typically were 2-4 mV lower than the OCV values of the cells of **Example 1,** providing somewhat improved storage performance relative to cells of **Example 1.**

Referring to **FIG. 4****,** the discharge voltage profiles for the cells of **Example 4** discharged at a relative low rate are similar in shape to the discharge voltage profiles for the cells of **Example 1,** except for an about 10 mV increase in CCV during the first half of the discharge curve. However, the average CCV of the cells of **Comparative Example 2** including acid-treated EMD as the only cathode active material was consistently higher than that of any of the cells of **Example 1** including λ-MnO₂ or the cells of **Example 5a-d** including blends of λ-MnO₂ and acid-treated EMD. Without wishing to be bound by theory, it is believed that higher CCV values could result from a higher average manganese oxidation state for the acid-treated EMD compared to λ-MnO₂ It is also believed that the lower average Mn oxidation state for λ-MnO₂ could result from the presence of some residual Li⁺ ions or protons in the lattice possibly due to non-stoichiometry of the precursor spinel.

**Table 2. Discharge performance of alkaline cells with cathodes including blends of λ-MnO₂ and acid-treated EMD**

| **Ex. No.** | **Cathode active material** | **Wt% λ-MnO₂** | **Total Graphite (wt%)** | **Ave OCV (V)** | **Capacity to 0.8V @10 mA/g (mAh/g)** |
|---|---|---|---|---|---|
| C1 | Commercial EMD | 0 | 20 | 1.62 | 287 |
| C2 | Acid-treated EMD | 0 | 20 | 1.74 | 296 |
| 1 | λ-MnO₂ | 100 | 20 | 1.71 | 319 |
| 5a | λ-MnO₂ + acid-treated EMD | 50 | 20 | 1.69 | 321 |
| 5b | λ-MnO₂ + acid-treated EMD | 10 | 20 | 1.67 | 304 |
| 5c | λ-MnO₂ + acid-treated EMD | 20 | 20 | 1.67 | 309 |
| 5d | λ-MnO₂ + acid-treated EMD | 30 | 20 | 1.68 | 312 |

### EXAMPLE 6 - Batteries including blends of λ-MnO₂ and Li₁₋ₓH_{y}NiO₂

Blends of λ-MnO₂ and delithiated Li₁₋ₓH_{y}NiO₂ in various weight ratios were prepared by mechanical dry mixing or milling. For example, a 1:1 blend by weight of λ-MnO₂ and Li₁₋ₓH_{y}NiO₂ was prepared by blending 0.75 g of the delithiated Li₁₋ₓH_{y}NiO₂ of **Example 4** and 0.75 g of the λ-MnO₂ of **Example 1** in a laboratory blade mill. A wet cathode mix was prepared by further blending the λ-MnO₂ and the delithiated Li₁₋ₓH_{y}NiO₂ with a natural graphite, for example, MP-0507 (i.e., NdG-15) (Nacionale de Grafite, Itapecerica, MG Brazil) or an oxidation resistant graphite, for example, Timrex^{®} SFG-15 (Timcal America Co., Westlake, OH) and an electrolyte solution containing 38 wt% KOH and 2 wt% zinc oxide in a weight ratio of blend: graphite: electrolyte of 75:20:5. Button cells were fabricated using the wet cathode mix by the general method described in **Example 1.** For example, the cells of **Example 6a** including a 1:1 blend of λ-MnO₂ and the delithiated Li₁₋ₓH_{y}NiO₂ discharged at a relative low discharge rate (e.g., 10 mA/g) to a 0.8 V cutoff voltage provided an average gravimetric specific capacity of about 345 mAh/g. This value corresponds to about 108% of the specific capacity of the cells of **Example 1** containing λ-MnO₂ as the only cathode active material.

Similarly, other blends of the Li₁₋ₓH_{y}NiO₂ of **Example 4** and the λ-MnO₂ of **Example 1** were prepared in weight ratios of 1:19, 1:9, 3:1.7, and 3:7 corresponding to 5%, 10%, 15%, and 30% by weight Li₁₋ₓH_{y}NiO₂, respectively. Button cells were fabricated by the general method of **Example** 1 including blends of the Li₁₋ₓH_{y}NiO₂ of **Example 4** and the λ-MnO₂ of **Example 1** having weight ratios of 1:19, 1:9, 3:17, and 3:7 corresponding to the cells **of Examples 6b-e,** respectively. Referring to **FIG. 5****,** typical discharge curves for cells including the blends of Li₁₋ₓH_{y}NiO₂ and λ-MnO₂ of **Examples 6a-e** are compared to those for cells of **Examples 1** and **4** all discharged at low rate (e.g., 10 mA/g active) to a 0.8 V cutoff voltage. The average discharge capacities and OCV values for the cells of **Examples 6a-e** are given in **Table 3.**

Primary alkaline cells with cathodes including various blends of λ-MnO₂ and delithiated lithium nickel oxide (e.g., Li₁₋ₓHyNiO₂) also can have a greater average CCV than cells including λ-MnO₂ as the only cathode active material. For example, referring to **FIG. 5****,** the cells **of Examples 6a-e** including blends of Li₁₋ₓH_{y}NiO₂ and λ-MnO₂ have initial CCV values ranging from about 110 to 270 mV higher than a typical cell of **Example 1** including λ-MnO₂ as the only cathode active material. In addition, referring to **Table 3,** the cells of **Examples 6b-d** with cathodes including blends of Li₁₋ₓH_{y}NiO₂ and λ-MnO₂ containing less than about 30% by weight of Li₁₋ₓH_{y}NiO₂ had average gravimetric capacities that were comparable to the average capacity of the cells of **Example 1.** For example, the cells of **Example 6d** with cathodes including a 17:3 blend by weight of λ-MnO₂ and Li₁₋ₓH_{y}NiO₂ had a much greater initial CCV than the cells of **Example 1** and an average discharge capacity about 2% greater than the average discharge capacity of the cells of **Example 1.** In addition, the average OCV of the cells of **Examples 6b-e** including blends of Li₁₋ₓH_{y}NiO₂ and λ-MnO₂ containing less than about 30 wt% Li₁₋ₓH_{y}NiO₂ was nearly 150 mV lower than that of cells of **Example 4** including Li₁₋ₓH_{y}NiO₂ as the only cathode active material. Cells having lower OCV values typically undergo less self-discharge via electrolyte decomposition by the cathode active material during storage, resulting in improved stored performance.

Referring to **FIG. 5****,** typical discharge voltage profiles for the cells of **Examples 6a-e** are compared to those for the cells of **Example 1** and **Example 4.** For the cells of **Examples 6a-e** with cathodes including blends of λ-MnO₂ and Li₁₋ₓH_{y}NiO₂ in various weight ratios ranging from 1:19 to 1:1, the initial CCV increased from about 1.45 V for the cells of **Example 6b** to about 1.55 V for the cells of **Example 6a.** The amount of discharge capacity on the 1.55 V plateau increased with the weight ratio of Li₁₋ₓH_{y}NiO₂ in the blend. Thus, increasing the proportion of Li₁₋ₓH_{y}NiO₂ in the blend with λ-MnO₂ had greater impact on the average CCV and OCV than total discharge capacity.

**Table 3. Discharge performance of alkaline cells with cathodes including blends of λ-MnO₂ and delithiated lithium nickelate**

| **Ex. No.** | **Cathode Active** | **Wt% Li₁₋ₓH_{y}NiO₂** | **Total Graphite (wt%)** | **Ave OCV (V)** | **Capacity to 0.8V @10 mA/g (mAh/g)** |
|---|---|---|---|---|---|
| 1 | λ-MnO₂ | 0 | 20 | 1.71 | 319 |
| 6b | Li₁₋ₓH_{y}NiO₂ + λ-MnO₂ | 5 | 20 | 1.72 | 323 |
| 6c | Li₁₋ₓH_{y}NiO₂ + λ-MnO₂ | 10 | 20 | 1.72 | 316 |
| 6d | Li₁₋ₓH_{y}NiO₂ + λ-MnO₂ | 15 | 20 | 1.72 | 325 |
| 6e | Li₁₋ₓH_{y}NiO₂ + λ-MnO₂ | 30 | 20 | 1.73 | 327 |
| 6a | Li₁₋ₓH_{y}NiO₂ + λ-MnO₂ | 50 | 20 | 1.78 | 345 |
| 4 | Li₁₋ₓH_{y}NiO₂ | 100 | 20 | 1.85 | 400 |

### INFORMATIVE EXAMPLE 7 - Batteries including blends of λ-MnO₂ and CoOOH-coated β-NiOOH

Blends of λ-MnO₂ and NiOOH in various weight ratios were prepared by mechanical dry mixing or milling. For example, a 1:1 blend by weight of λ-MnO₂ and CoOOH-coated β-NiOOH was prepared by blending 0.675 g of a commercial CoOOH-coated β-NiOOH (Kansai Catalyst Co., Osaka, Japan) and 0.675 g of the λ-MnO₂ of **Example 1** in a laboratory blade mill. A wet cathode mix was prepared by further blending the λ-MnO₂ and NiOOH with a natural graphite, for example, MP-0507 (i.e., NdG15) (Nacionale de Grafite, Itapecerica, MG Brazil) or an oxidation resistant graphite, for example, Timrex^{®} SFG-15 (Timcal America Co., Westlake, OH) and an electrolyte solution containing 38 wt% KOH and 2 wt% zinc oxide in a weight ratio of blend: graphite: electrolyte of 75:20:5. Button cells were fabricated using the wet cathode mix by the general method described in **Example 1.** Typically, cells were tested within 24 hours after fabrication and OCV values measured immediately before discharge. The cells of **Example 7a** including a 1:1 blend by weight of the λ-MnO₂ and the NiOOH discharged at a relative low discharge rate (e.g., 10 mA/g) to a 0.8 V cutoff voltage provided an average gravimetric specific capacity of about 245 mAh/g. This value corresponds to about 109% of the specific capacity of the cells of **Comparative Example 3** containing the CoOOH-coated β-NiOOH as the only active cathode material. The average of the cells of **Example 7a** including a 1:1 blend by weight of the λ-MnO₂ and the NiOOH was about 1.73 V, the same as that of the cells of **Comparative Example 3.**

Other blends of the λ-MnO₂ of **Example 1** and the Co00H-coated β-NiOOH of **Comparative Example 3** were prepared in weight ratios of 9:1, 7:3, and 3:7. Button cells were fabricated in the general manner described in **Example 1** but including blends of the λ-MnO₂ of **Example 1** and the β-NiOOH of **Comparative Example 3** with weight ratios of 9:1, 7:3, and 3:7 corresponding to the cells of **Examples 7b-d,** respectively. Average discharge capacities and OCV for the cells of **Examples 7b-d** are given in **Table 4.**

Referring to **FIG. 6****,** typical discharge curves for the cells of **Examples 7a-d** discharged at a low rate (e.g., 10 mA/g active) to a 0.8 V cutoff voltage are compared to those for the cells of **Example 1** and **Comparative Example 3.** The initial CCV of the cells of **Examples 7a-d** with cathodes including blends of λ-MnO₂ and β-NiOOH in various weight ratios ranging from 9:1 to 3:7 increased from about 1.45 V for the cells of **Comparative Example 3** to about 1.55 V for the cells of **Examples 7a-d.** Further, the amount of discharge capacity on the 1.55 V plateau increased with the weight ratio of β-NiOOH in the blend. However, the total discharge capacity decreased substantially for cells with cathodes including blends with greater than about 50 % β-NiOOH by weight. Referring to **Table 4,** the OCV values of the cells of **Examples 7a-b** and **7d** were comparable to those for the cells of both **Example 1** and **Comparative Example 3.**

**Table 4. Discharge performance of alkaline cells with cathodes including blends of λ-MnO₂ and CoOOH-coated β-NiOOH**

| Ex. No. | Cathode Active | Wt% NiOOH | Total Graphite (wt%) | Ave OCV (V) | Capacity to 0.8V @10mA/g (mAh/g) |
|---|---|---|---|---|---|
| 1 | λ-MnO₂ | 0 | 20 | 1.71 | 319 |
| 7b | CoOOH-ctd β-NiOOH + λ-MnO₂ | 10 | 20 | 1.74 | 299 |
| 7c | CoOOH-ctd β-NiOOH + λ-MnO₂ | 30 | 20 | 1.77 | 277 |
| 7a | CoOOH-ctd β-NiOOH + λ-MnO₂ | 50 | 20 | 1.73 | 244 |
| 7d | CoOOH-ctd β-NiOOH + λ-MnO₂ | 70 | 20 | 1.72 | 243 |
| C3 | CoOOH-ctd β-NiOOH | 100 | 20 | 1.73 | 224 |

### INFORMATIVE EXAMPLE 8 - Batteries including blends of λ-MnO₂ and Ag₂O

Blends of λ-MnO₂ and Ag₂O in various weight ratios were prepared by mechanical dry mixing or milling. For example, a mixture of 0.135 g of Ag₂O (Aldrich, ReagentPlus grade) and 1.215 g of the λ-MnO₂ of **Example 1** (i.e., 1:9 by weight) was blended in a laboratory blade mill. A wet cathode mix was prepared by further blending the Ag₂O and λ-MnO₂ with a natural graphite, for example, NdG-15 (Nacionale de Grafite, Brazil) or an oxidation resistant graphite, for example, Timrex^{®} SFG-15 (Timcal America Co., Westlake, OH) and an electrolyte solution containing 38 wt% KOH and 2 wt% zinc oxide in a weight ratio of (blend: graphite: electrolyte) of (75:20:5). Button cells were fabricated using the wet cathode mix by the general method described in **Example 1.** Typically, cells were tested within 24 hours after fabrication and OCV values measured immediately before discharge. For example, the average OCV of the cells of **Example 8a** including a 9:1 blend by weight of the λ-MnO₂ and the Ag₂O was about 1.74 V, nearly 200 mV higher than that of the cells of **Comparative Example 4.** Referring to **Table 5,** the average gravimetric discharge capacity for cells of **Example 8a** discharged at 10 mA/g to a 0.8 V cutoff voltage was about 347 mAh/g. This value corresponds to about 156% of the specific capacity of the cells of **Comparative Example 4** including Ag₂O as the only cathode active material. This value also corresponds to about 109% of the average gravimetric capacity of the cells of **Example 1** including λ-MnO₂ as the only cathode active material. Further, this value is unexpectedly greater than that calculated from the sum of the proportional average capacities of the cells of **Example 1** and **Comparative Example 4.** For example, the average capacity of the cell of **Example 8a** is about 112% of the value calculated from the sum of 90% of the average capacity of the cells of Example 1 and 10% of the average capacity of the cells of **Comparative Example 4.**

Other blends of the λ-MnO₂ of **Example 1** and the Ag₂O of **Comparative Example 4** were prepared in weight ratios of 4:1, 7:3, and 1:1, corresponding to 20%, 30%, and 50% by weight Ag₂O, respectively. Button cells were fabricated in the general manner described in **Example 1** but including blends of the λ-MnO₂ of **Example 1** and the Ag₂O of **Comparative Example 4** with weight ratios of 4:1, 7:3, and 1:1 corresponding to the cells of **Examples 8b-d,** respectively. Average discharge capacities and OCV values for the cells of **Examples 8a-d** are given in **Table 5.** In general, the OCV values for the cells of **Examples 8a-d** were higher (e.g., 30-40 mV higher) than those for the cells of **Example 1** including the λ-MnO₂ as the only cathode active material.

Referring to **FIG.7****,** discharge voltage profiles for the cells of **Examples 8a-d** can be compared to those for the cells **of Example 1** and **Comparative Example 4.** In general, the discharge capacity on the upper voltage plateau (i.e., ∼1.55 V) for the cells of **Examples 8a-d** increased in proportion to the amount of Ag₂O in the blend. The average CCV for the cells of **Examples 8a-d** was about 100 mV higher at 50% depth-of-discharge (i.e., ∼160 mAh/g based on the average capacity for the cells of **Example 1)** than that for the cells of **Examples 7a-c.** Without wishing to be bound by theory, it is believed that the observed increase in average CCV during the final 50% of discharge for the cells of **Examples 8a**-**d** including blends of λ-MnO₂ and Ag₂O relative to that for the cells of **Examples 7a-d** including blends of λ-MnO₂ and CoOOH-coated β-NiOOH can be attributed to the formation of metallic silver during discharge of Ag₂O. The presence of metallic silver can serve to increase the overall electronic conductivity of the cathode and result in decreased battery impedance and consequently decreased cell polarization during discharge. The gravimetric discharge capacity was greatest for the cells of **Example 8a** including a 1:9 blend of Ag₂O and λ-MnO₂ and decreased with increasing amount of Ag₂O. For example, total discharge capacity for the cells of **Example 8d** including a 1:1 blend of Ag₂O and λ-MnO₂ was 85% of that for the cells of **Example 1** including λ-MnO₂ as the only cathode active material and 81 % of that for the cells of **Example 8a**.

**Table 5. Discharge performance of alkaline cells with cathodes including blends of λ-MnO₂ and Ag₂O**

| Ex. No. | Cathode Active | Wt% Ag₂O | Total Graphite (wet%) | Ave OCV (V) | Capacity to 0.8V @ 10 mA/g (mAh/g) |
|---|---|---|---|---|---|
| 1 | λ-MnO₂ | 0 | 20 | 1.71 | 319 |
| 8a | Ag₂O + λ-MnO₂ | 10 | 20 | 1.74 | 347 |
| 8b | Ag₂O + λ-MnO₂ | 20 | 20 | 1.75 | 334 |
| 8c | Ag₂O + λ-MnO₂ | 30 | 20 | 1.75 | 317 |
| 8d | Ag₂O + λ-MnO₂ | 50 | 20 | 1.75 | 281 |
| C4 | Ag₂O | 100 | 20 | 1.55 | 223 |

### INFORMATIVE EXAMPLE 9 - Batteries including blends of λ-MnO₂, CoOOH-coated β-NiOOH, and Ag₂O

Ternary blends of λ-MnO₂ and Ag₂O in various weight ratios were prepared by mechanical dry mixing or milling in the same manner as the binary blends of **Examples 7** and **8.** For example, a mixture of 0.1875 g of Ag₂O (Aldrich, ReagentPlus grade), 0.1875 g of CoOOH- coated β-NiOOH (Kansai Catalyst Corp.) and 1.59 g of the λ-MnO₂ of **Example 1** (i.e., 1:1:8 by weight) was blended in a laboratory blade mill or manually with a mortar and pestle. A wet cathode mix was prepared by further blending 1.96 g cathode active blend with 0.5 g oxidation-resistant synthetic graphite (e.g., Timcal-America, Timrex SFG-15) and 0.125 g alkaline electrolyte solution containing 38 wt% KOH and 2 wt% zinc oxide in a weight ratio of (Ag₂O + NiOOH + λ-MnO₂) : graphite : electrolyte of 75:20:5. Button cells were fabricated by the general method described in **Example 1.** The cells were tested within 24 hours after fabrication and the OCV measured immediately before the start of discharge. For example, the average OCV of the cells of **Example 9a** was 1.76 V. Average gravimetric capacity of the cells of **Example 9a** discharged at 10 mA/g total active was about 329 mAh/g. Referring to **Table 6,** this value corresponds to about 103% of the average capacity of the cells of **Example 1** and nearly 150% of the average capacities of the cells of **Comparative Examples 3** and **4.** Referring to **Table 5,** this value is comparable to that for the cells of **Example 8b** including 20% Ag₂O by weight and no CoOOH-coated β-NiOOH. Referring to **Table 4,** this value is about 110% of that for the cells of **Example 7b** including 10% CoOOH-coated β-NiOOH by weight and no Ag₂O. Thus, cells including a ternary blend of λ-MnO₂ and both CoOOH-coated β-NiOOH, and Ag₂O can provide enhanced performance for relative low amounts of Ag₂O.

A mixture of Ag₂O, CoOOH-coated β-NiOOH, and λ-MnO₂ in a weight ratio of 2:1:7 was blended in a laboratory blade mill. A wet cathode mix was prepared by blending the cathode active blend with oxidation-resistant graphite and alkaline electrolyte solution in a weight ratio of active blend: graphite: electrolyte of 75:20:5. Button cells were fabricated by the general method described in **Example 1.** Average gravimetric capacity for the cells of **Example 9b** discharged at 10 mA/g total active was about 312 mAh/g. Referring to **Table 6,** this value is comparable to that for the cells of **Example 1** and nearly 140% of the average capacities of the cells of **Comparative Examples 3** and **4.**

Referring to **FIG. 8****,** typical discharge curves for the cells of **Examples 9a** and **9b** are compared with those for the cells of **Example 1** and **Comparative Example 4.** The average CCV for the cells of **Example 9a** was 50-200 mV greater during the initial 25% of discharge and 50-100 mV greater during the final 25% of discharge than that for cells of **Example 1.**

Without wishing to be bound by theory, it is believed that the presence of CoOOH-coated β-NiOOH serves to increase the initial CCV, the presence of Ag₂O results in decreased battery polarization in the final 50% of discharge due to the formation of metallic Ag, and the presence of λ-MnO₂ serves to increase the total gravimetric capacity relative to both CoOOH-coated β-NiOOH and Ag₂O.

**Table 6. Discharge performance for alkaline cells with cathodes including blends of λ-MnO₂, CoOOH-coated β-NiOOH, and Ag₂O**

| Ex. No. | Cathode Active | Wt% NiOOH | Wt% Ag₂O | Total Graphite (wt%) | Ave OCV | Capacity to 0.8V @10 mA/g (mAh/g) |
|---|---|---|---|---|---|---|
| 1 | λ-MnO₂ | 0 | 0 | 20 | 1.71 | 319 |
| C3 | CoOOH-ctd β-NiOOH | 100 | 0 | 20 | 1.73 | 224 |
| C4 | Ag₂O | 0 | 100 | 20 | 1.55 | 223 |
| 9a | λ-MnO₂+NiOOH+Ag₂O | 10 | 10 | 20 | 1.75 | 317 |
| 9b | λ-MnO₂+NiOOH+Ag₂O | 10 | 20 | 20 | 1.75 | 281 |

### INFORMATIVE EXAMPLE 10 - Batteries including composites of λ-MnO₂ and acid-treated EMD

Composites of λ-MnO₂ and acid-treated EMD in various weight ratios were prepared by simultaneous acid treatment of a mixture of a nominally stoichiometric lithium manganese oxide spinel, LiMn₂O₄ and a commercial EMD. For example, a 1:1 mixture by weight of the LiMn₂O₄ spinel precursor to λ-MnO₂ prepared as described in **Example** 2 and the same commercial EMD employed in Comparative Example 1 was prepared by manually dry blending 1.00 g of the spinel powder and 1.00 g of the EMD powder with a mortar and pestle. The 1:1 mixture of spinel and EMD powders was treated in aqueous 6M H₂SO₄ solution at low temperature as described **in Example 2.** The X-ray powder diffraction pattern of the dried solid product from the simultaneous acid treatment of the mixture of spinel and EMD powders included the characteristic diffraction peaks of both λ-MnO₂ and EMD and no discernible peaks of LiMn₂O₄ spinel. Because of the loss of lithium and manganese from the spinel and slight loss of manganese during acid treatment, the corrected weight ratio or λ-MnO₂ to acid-treated EMD in the product was about 10:13. A wet cathode mix was prepared by blending the composite including λ-MnO₂ and acid-treated EMD with a natural graphite, for example, MP-0507 (i.e., NdG15) (Nacionalc dc Grafite, Itapecerica, MG Brazil) or an oxidation resistant graphite, for example, Timrex^{®} SFG-15 (Timcal America Co., Westlake, OH), and electrolyte solution containing 38 wt% KOH and 2 wt% zinc oxide in a weight ratio of (composite: graphite: electrolyte) of (75:20:5). Button cells were prepared from the wet cathode mix in the general manner described in **Example 1.** The cells of **Example 10a** with cathodes including a nominal 1:1 composite of λ-MnO₂ and acid-treated EMD discharged at a relative low rate (e.g., 10 mA/g active) to a 0.8 V cutoff voltage provided an average gravimetric specific capacity of about 329 mAh/g. Referring to **Table 2,** this corresponds to about 102% of the average capacity of the cells of **Example 5a** containing a true 1:1 blend by weight of λ-MnO₂ and acid-treated EMD discharged at the same rate to a 0.8 V cutoff voltage. The greater capacity of the cells including the nominal 1:1 composite of λ-MnO₂ and acid-treated EMD is unexpected since the composite actually includes only about 86% as much λ-MnO₂ as the 1:1 blend of λ-MnO₂ and acid-treated EMD. Referring to **Table 7,** the capacity of the nominal 1:1 composite corresponds to about 111% of the average capacity of the cells of **Comparative Example 2** including acid-treated EMD as the only cathode active material. Further, the capacity of the nominal 1:1 composite corresponds to about 99% of the average capacity of the cells of **Example 2** including λ-MnO₂ as the only cathode active material.

Similarly, other composites including λ-MnO₂ and acid-treated EMD were prepared by acid-treatment of mixtures of LiMn₂O₄ spinel and EMD in weight ratios of 1:9, 1:4, and 3:7 corresponding to weight ratios of λ-MnO₂ to acid-treated EMD of 1:12, 10:53, and 10:31, respectively, in the resulting composites of **Examples 10b-d.** Button cells were prepared from these composites as described in **Example 1.** Average gravimetric specific capacities and OCV values are given in **Table 7.** For several of the composites, the value of the average gravimetric capacity is unexpectedly greater than that calculated from the sum of the proportional average capacities of the cells of **Example 2** and **Comparative Example 2.** For example, the average capacity of the cells of **Example 10a** is about 108% of that calculated from the sum of 57% of the average capacity of the cells of **Comparative Example 2** and 43% of the average capacity of the cells of **Example 2,** all discharged at 10 mA/g active to a 0.8 V cutoff voltage. Without wishing to be bound by theory, it is believed that the increased capacity of the cells including a composite of λ-MnO₂ and acid-treated EMD relative to that of cells including a blend of λ-MnO₂ and acid-treated EMD may be related to an enhanced electronic interaction between manganese atoms of the λ-MnO₂ and acid-treated EMD arising from the extensive interfacial contact between the particles in the composite.

Referring to **FIG. 9****,** discharge curves for typical cells of **Examples 10a-d** including composites of λ-MnO₂ and acid-treated EMD as the cathode active materials discharged at a relative low rate (e.g., 10 mA/g active) to a 0.8 V cutoff voltage are compared to those of typical cells of **Example 2** and **Comparative Example 2.** For example, the cells of **Examples 10a-d** all have much higher initial discharge voltages (e.g., 50-100 mV higher) as well as somewhat higher average discharge voltages (e.g., 5-50 mV higher) than typical cells of **Example** 2 including λ-MnO₂ as the only cathode active material. Also, average OCV values of the cells of **Example 10a-d** are typically lower than the OCV values of the cells of **Comparative Example 2** consistent with somewhat improved storage performance relative to the cells of **Comparative Example 2.**

**Table 7. Discharge performance of alkaline cells with cathodes including composites of λ-MnO₂ and acid-treated EMD**

| **Ex. No.** | **Cathode active material** | **Wt% LiMn₂O₄ before acid treat.** | **Wt% λ-MnO₂ after acid treat.** | **Total Graphite (wt%)** | **Ave OCV (V)** | **Capacity to 0.8V @10 mA/g (mAh/g)** |
|---|---|---|---|---|---|---|
| C2 | Acid-treated EMD | 0 | 0 | 20 | 1.74 | 286 |
| 2 | λ-MnO₂ | 100 | 100 | 20 | 1.71 | 332 |
| 10a | λ-MnO₂ + AT-EMD | 50 | 43 | 20 | 1.70 | 329 |
| 10b | λ-MnO₂ + AT-EMD | 10 | 8 | 20 | 1.68 | 294 |
| 10c | λ-MnO₂ + AT-EMD | 20 | 16 | 20 | 1.67 | 299 |
| 10d | λ-MnO₂ + AT-EMD | 30 | 24 | 20 | 1.68 | 312 |

### Other embodiments

While certain embodiments have been described, other embodiments are possible. For example, oxidative delithiation of a LiMn₂O₄ spinel also can be performed using aqueous oxidizing agents other than ammonium peroxydisulfate, sodium peroxydisulfate, potassium peroxydisulfate or ozone gas, for example, aqueous solutions of sodium peroxydiphosphate or potassium peroxydiphosphate, sodium perborate, sodium hypochlorite or potassium hypochlorite, sodium chlorate, sodium bromate, sodium permanganate or potassium permanganate, and cerium (IV) ammonium sulfate or cerium (IV) ammonium nitrate. Use of a strong aqueous chemical oxidant such as a peroxydisulfate salt or ozone or a non-aqueous oxidizing agent to oxidize the Mn(III) to Mn(IV) in the LiMn₂O₄ spinel can minimize loss of manganese via dissolution of Mn²⁺ ions from the disproportionation of Mn³⁺ during aqueous acid treatment. Non-aqueous oxidizing agents can include, for example, nitrosonium tetrafluoroborate or nitronium tetrafluoroborate in acetonitrile, nitrosonium hexafluorophosphate or nitronium hexafluorophosphate in acetonitrile, and oleum (i.e., SO₃/H₂SO₄) in sulfolane.

Other embodiments are in the claims.

## Claims

1. A cathode comprising a blend of λ-MnO₂ and one or more cathode active material, said material comprising a partially delithiated layered nickel oxide having the general chemical formula Li₁₋ₓH_{y}NiO₂ wherein 0.1 ≤ x ≤ 0.9; 0.1 ≤ y ≤ 0.9.

2. The cathode of claim 1, wherein a further cathode active material is selected from the group consisting of an electrolytic manganese dioxide, an acid-treated electrolytic manganese oxide, an ozone-treated electrolytic manganese oxide, a chemically-prepared manganese dioxide, a nickel oxide, a complex metal oxide containing tetravalent nickel, a silver-containing metal oxide, an alkali or alkaline earth metal ferrate, a copper-containing metal oxide, a carbon fluoride (CFₓ)ₙ, a complex metal oxide containing pentavalent bismuth, and combinations thereof.

3. The cathode of claim 2, wherein the nickel oxide is selected from the group consisting of nickel oxyhydroxide, cobalt oxyhydroxide-coated nickel oxyhydroxide, delithiated layered lithium nickel oxide, and combinations thereof.

4. The cathode of claim 3, wherein the nickel oxyhydroxide is selected from the group consisting of beta-nickel oxyhydroxide, gamma-nickel oxyhydroxide, and intergrowths of beta-nickel oxyhydroxide and gamma-nickel oxyhydroxide.

5. The cathode of claim 3, wherein the cobalt oxyhydroxide-coated nickel oxyhydroxide is selected from the group consisting of cobalt oxyhydroxide-coated beta-nickel oxyhydroxide, cobalt oxyhydroxide-coated gamma-nickel oxyhydroxide, and cobalt oxyhydroxide-coated intergrowths of beta-nickel oxyhydroxide and gamma-nickel oxyhydroxide.

6. The cathode of any one of the preceding claims, wherein the metal ferrate is selected from the group consisting of potassium ferrate, barium ferrate, strontium ferrate, cesium ferrate, and combinations thereof.

7. The cathode of any one of the preceding claims, wherein the complex bismuth metal oxide is selected from the group consisting of silver bismuthate, zinc bismuthate, magnesium bismuthate, and combinations thereof.

8. The cathode of any one of the preceding claims, wherein the silver-containing metal oxide is selected from the group consisting of silver(I) oxide, silver(II) oxide, silver copper oxide, silver nickel oxide, silver cobalt nickel oxide, and combinations thereof.

9. The cathode of any one of the preceding claims, wherein the blend comprises a λ-MnO₂ to acid-treated electrolytic manganese oxide weight ratio of 19:1 or less and 1:9 or more.

10. The cathode of any one of the preceding claims, wherein the blend comprises a λ-MnO₂ to nickel oxide weight ratio of 19:1 or less and 1:9 or more.

11. The cathode of any one of the preceding claims, wherein the blend comprises a λ-MnO₂ to silver-containing metal oxide weight ratio of 19:1 or less and 1:9 or more.

12. The cathode of any one of the preceding claims, wherein the blend comprises between 30 % or more by weight, or 95 % or less by weight of λ-MnO₂.

13. The cathode of any one of the preceding claims, wherein the blend comprises λ-MnO₂ and two additional cathode active materials, each independently selected from the group consisting of acid-treated electrolytic manganese dioxide, ozone-treated electrolytic manganese oxide, chemically-prepared manganese dioxide, nickel oxide, nickel oxyhydroxide, silver (I) oxide, metal ferrate, (CFₓ)ₙ, complex bismuth metal oxide containing pentavalent bismuth, and combinations thereof.

14. The cathode of any one of the preceding claims, wherein the blend has an average particle size of 30 microns or less.

15. The cathode of any one of the preceding claims, wherein the blend has an average particle size of 4 microns or less.

## Patentansprüche

1. Kathode, aufweisend eine Mischung aus λ-MnO₂ und einem oder mehreren kathodenaktiven Materialien, wobei das Material ein teilweise delithiiertes Nickelschichtoxid, das die chemische Formel
Li₁₋ₓH_{y}NiO₂ hat, aufweist, wobei 0,1 ≤ x ≤ 0,9; 0,1 ≤ y ≤ 0,9.

2. Kathode aus Anspruch 1, wobei ein weiteres kathodenaktives Material ausgewählt ist aus der Gruppe bestehend aus einem elektrolytischen Mangandioxid, einem säurebehandelten elektrolytischen Manganoxid, einem ozonbehandelten elektrolytischen Manganoxid, einem chemisch präparierten Mangandioxid, einem Nickeloxid, einem komplexen Metalloxid, das vierwertiges Nickel enthält, einem silberhaltigen Metalloxid, einem Alkali- oder Erdalkalimetallferrat, einem kupferhaltigen Metalloxid, einem Carbonfluorid (CFₓ)ₙ, einem komplexen Metalloxid, das fünfwertiges Bismut beinhaltet, und Kombinationen daraus.

3. Kathode aus Anspruch 2, wobei das Nickeloxid ausgewählt ist aus der Gruppe bestehend aus Nickeloxydhydroxid, Kobaltoxydhydroxid-beschichtetem Nickeloxydhydroxid, delithiiertem Lithium-Nickelschichtoxid, und Kombinationen daraus.

4. Kathode aus Anspruch 3, wobei das Nickeloxydhydroxid ausgewählt ist aus der Gruppe bestehend aus Beta-Nickeloxydhydroxid, Gamma-Nickeloxydhydroxid, und Verwachsungen aus Beta-Nickeloxydhydroxid und Gamma-Nickeloxydhydroxid.

5. Kathode aus Anspruch 3, wobei das Kobaltoxydhydroxid-beschichtete Nickeloxydhydroxid ausgewählt ist aus der Gruppe bestehend aus Kobaltoxydhydroxid-beschichtetem Beta-Nickeloxydhydroxid, Kobaltoxydhydroxid-beschichtetem Gamma-Nickeloxyd-hydroxid, und Kobaltoxydhydroxidbeschichteten Verwachsungen aus Beta-Nickeloxydhydroxid und Gamma-Nickeloxydhydroxid.

6. Kathode nach einem der vorhergehenden Ansprüche, wobei das Metallferrat ausgewählt ist aus der Gruppe bestehend aus Kaliumferrat, Bariumferrat, Strontiumferrat, Cäsiumferrat, und Kombinationen daraus.

7. Kathode nach einem der vorhergehenden Ansprüche, wobei das komplexe Bismutmetalloxid ausgewählt ist aus der Gruppe bestehend aus Silberbismutat, Zinkbismutat, Magnesiumbismutat, und Kombinationen daraus.

8. Kathode nach einem der vorhergehenden Ansprüche, wobei das silberhaltige Metalloxid ausgewählt ist aus der Gruppe bestehend aus Silber(I)-oxid, Silber(II)-oxid, Silberkupferoxid, Silbernickeloxid, Silberkobaltnickeloxid, und Kombinationen daraus.

9. Kathode nach einem der vorhergehenden Ansprüche, wobei die Mischung ein Gewichtsverhältnis von λ-MnO₂ zu säurebehandeltem, elektrolytischen Manganoxid von 19:1 oder weniger und 1:9 oder mehr aufweist.

10. Kathode nach einem der vorhergehenden Ansprüche, wobei die Mischung ein Gewichtsverhältnis von λ-MnO₂ zu Nickeloxid von 19:1 oder weniger und 1:9 oder mehr aufweist.

11. Kathode nach einem der vorhergehenden Ansprüche, wobei die Mischung ein Gewichtsverhältnis von λ-MnO₂ zu silberhaltigem Metalloxid von 19:1 oder weniger und 1:9 oder mehr aufweist.

12. Kathode nach einem der vorhergehenden Ansprüche, wobei die Mischung zwischen 30 % oder mehr Gewichtsanteilen oder 95 % oder weniger Gewichtsanteilen von λ-MnO₂ aufweist.

13. Kathode nach einem der vorhergehenden Ansprüche, wobei die Mischung λ-MnO₂ und zwei zusätzliche kathodenaktive Materialien aufweist, jeweils unabhängig ausgewählt aus der Gruppe bestehend aus säurebehandeltem elektrolytischen Mangandioxid, ozonbehandeltem elektrolytischen Manganoxid, chemisch präpariertem Mangandioxid, Nickeloxid, Nickeloxydhydroxid, Silber(I)-oxid, Metallferrat, (CFₓ)ₙ, komplexem Bismutmetalloxid, das fünfwertiges Bismut enthält, und Kombinationen daraus.

14. Kathode nach einem der vorhergehenden Ansprüche, wobei die Mischung eine mittlere Partikelgröße von 30 µm oder weniger hat.

15. Kathode nach einem der vorhergehenden Ansprüche, wobei die Mischung eine mittlere Partikelgröße von 4 µm oder weniger hat.

## Revendications

1. Cathode comprenant un mélange de λ-MnO₂ et d'un ou plusieurs matériaux actifs de cathode, ledit matériau comprenant un oxyde de nickel en couches partiellement délithié ayant la formule chimique générale Li₁₋ₓH_{y}NiO₂ dans laquelle 0,1 ≤ x ≤ 0,9 ; 0,1 ≤ y ≤ 0,9.

2. Cathode selon la revendication 1, dans laquelle un matériau actif de cathode supplémentaire est choisi dans le groupe constitué d'un dioxyde de manganèse électrolytique, d'un oxyde de manganèse électrolytique traité par un acide, d'un oxyde de manganèse électrolytique traité par de l'ozone, d'un dioxyde de manganèse préparé chimiquement, d'un oxyde de nickel, d'un oxyde métallique complexe contenant du nickel tétravalent, d'un oxyde métallique contenant de l'argent, d'un ferrate d'un métal alcalin ou alcalino-terreux, d'un oxyde métallique contenant du cuivre, d'un fluorure de carbone (CFₓ)ₙ, d'un oxyde métallique complexe contenant du bismuth pentavalent, et de leurs combinaisons.

3. Cathode selon la revendication 2, dans laquelle l'oxyde de nickel est choisi dans le groupe constitué de l'oxyhydroxyde de nickel, de l'oxyhydroxyde de nickel revêtu d'oxyhydroxyde de cobalt, de l'oxyde de nickel lithium en couches délithié, et de leurs combinaisons.

4. Cathode selon la revendication 3, dans laquelle l'oxyhydroxyde de nickel est choisi dans le groupe constitué de l'oxyhydroxyde de nickel bêta, de l'oxyhydroxyde de nickel gamma, et d'intercroissances d'oxyhydroxyde de nickel bêta et d'oxyhydroxyde de nickel gamma.

5. Cathode selon la revendication 3, dans laquelle l'oxyhydroxyde de nickel revêtu d'oxyhydroxyde de cobalt est choisi dans le groupe constitué de l'oxyhydroxyde de nickel bêta revêtu d'oxyhydroxyde de cobalt, de l'oxyhydroxyde de nickel gamma revêtu d'oxyhydroxyde de cobalt, et d'intercroissances d'oxyhydroxyde de nickel bêta et d'oxyhydroxyde de nickel gamma revêtues d'oxyhydroxyde de cobalt.

6. Cathode selon l'une quelconque des revendications précédentes, dans laquelle le ferrate d'un métal est choisi dans le groupe constitué du ferrate de potassium, du ferrate de baryum, du ferrate de strontium, du ferrate de césium, et de leurs combinaisons.

7. Cathode selon l'une quelconque des revendications précédentes, dans laquelle l'oxyde métallique complexe de bismuth est choisi dans le groupe constitué du bismuthate d'argent, du bismuthate de zinc, du bismuthate de magnésium, et de leurs combinaisons.

8. Cathode selon l'une quelconque des revendications précédentes, dans laquelle l'oxyde métallique contenant de l'argent est choisi dans le groupe constitué de l'oxyde d'argent (I), de l'oxyde d'argent (II), de l'oxyde d'argent cuivre, de l'oxyde d'argent nickel, de l'oxyde d'argent cobalt nickel, et de leurs combinaisons.

9. Cathode selon l'une quelconque des revendications précédentes, dans laquelle le mélange comprend un rapport en poids entre λ-MnO₂ et oxyde de manganèse électrolytique traité par un acide de 19:1 ou moins et 1:9 ou plus.

10. Cathode selon l'une quelconque des revendications précédentes, dans laquelle le mélange comprend un rapport en poids entre λ-MnO₂ et oxyde de nickel de 19:1 ou moins et 1:9 ou plus.

11. Cathode selon l'une quelconque des revendications précédentes, dans laquelle le mélange comprend un rapport en poids entre λ-MnO₂ et oxyde de métal contenant de l'argent de 19:1 ou moins et 1:9 ou plus.

12. Cathode selon l'une quelconque des revendications précédentes, dans laquelle le mélange comprend entre 30 % ou plus en poids, ou 95 % ou moins en poids de λ-MnO₂.

13. Cathode selon l'une quelconque des revendications précédentes, dans laquelle le mélange comprend du λ-MnO₂ et deux matériaux actifs de cathode additionnels, chacun indépendamment choisi dans le groupe constitué du dioxyde de manganèse électrolytique traité par un acide, de l'oxyde de manganèse électrolytique traité par de l'ozone, du dioxyde de manganèse préparé chimiquement, de l'oxyde de nickel, de l'oxyhydroxyde de nickel, de l'oxyde d'argent (I), d'un ferrate métallique, (CFₓ)ₙ, d'un oxyde métallique complexe de bismuth contenant du bismuth pentavalent, et de leurs combinaisons.

14. Cathode selon l'une quelconque des revendications précédentes, dans laquelle le mélange a une taille moyenne de particules de 30 microns ou moins.

15. Cathode selon l'une quelconque des revendications précédentes, dans laquelle le mélange a une taille moyenne de particules de 4 microns ou moins.
